# EUROPÄISCHE PATENTSCHRIFT

(11) **EP 3 558 621 B1**
(45) Veröffentlichungstag und Bekanntmachung des Hinweises auf die Patenterteilung: **14.05.2025**
(21) Anmeldenummer: 17800526.0
(22) Anmeldetag: 16.11.2017
(51) Int. Cl.: B29C 45/17, B29C 45/26, B29C 45/14, B62K 13/00, B62K 19/16, B62K 19/18, B62K 19/30

(54) **VERFAHREN ZUR HERSTELLUNG EINES FAHRRADRAHMENS**
METHOD OF MANUFACTURING A BICYCLE FRAME
MÉTHODE DE FABRICATION D'UN CADRE DE BICYCLETTE

(30) Priorität: 22.12.2016 DE 102016015538
(43) Veröffentlichungstag der Anmeldung: 30.10.2019
(73) Patentinhaber: Plastic Innovation GmbH, 4100 Ottensheim (AT)
(72) Erfinder: WOLFSBERGER, Christian, 4100 Ottensheim (AT)
(74) Vertreter: Laufhütte, Dieter
(86) Internationale Anmeldenummer: PCT/EP2017/079529
(87) Internationale Veröffentlichungsnummer: WO 2018/114155

(56) Entgegenhaltungen:
- EP-A1- 0 890 504
- WO-A1-2014/193245
- CN-A- 103 552 220
- DE-A1- 102007 036 869
- DE-A1- 102012 200 594
- DE-A1- 102015 110 933
- DE-A1- 4 328 349
- US-A1- 2004 212 171
- PRUNER HARRY ET AL: "Grundsätzlicher Werkzeugaufbau", SPRITZGIESSWERKZEUGE KOMPAKT, 1 May 2012 (2012-05-01), pages 1 - 2, XP093117961, Retrieved from the Internet <URL:https://www.hanser-elibrary.com/doi/abs/10.3139/9783446428775.001> [retrieved on 20240110], DOI: https://doi.org/10.3139/9783446428775.001
- FRIEDRICH WESTPHAL ET AL: "Fließende Produktgestaltung", KUNSTSTOFFE, 31 May 2013 (2013-05-31), https://www.kunststoffe.de/kunststoffe-zeitschrift/archiv, pages 57 - 60, XP055447511, Retrieved from the Internet <URL:https://www.kunststoffe.de/kunststoffe-zeitschrift/archiv/artikel/wasserinjektionstechnik-fliessende-produktgestaltung-533358.html> [retrieved on 20180202]
- ULRICH STIELER: "Mehr als nur Hohlräume", KUNSTSTOFFE, 1 November 2011 (2011-11-01), www.kunststoffe.de/kunststoffe-archiv, pages 48 - 50, XP055447469, Retrieved from the Internet <URL:https://www.kunststoffe.de/kunststoffe-zeitschrift/archiv/artikel/fluidinjektion-mehr-als-nur-hohlraeume-535703.html> [retrieved on 20180202]
- ANONYMOUS: "BASF und SGL entwickeln reaktive Polyamid-Carbonfaser-Composite - Plastverarbeiter.de", PLASTVERARBEITER, 11 October 2012 (2012-10-11), XP055278475, Retrieved from the Internet <URL:http://www.plastverarbeiter.de/14452/basf-und-sgl-entwickeln-reaktive-polyamid-carbonfaser-composite/> [retrieved on 20160607]

## Beschreibung

Die Erfindung betrifft ein Verfahren zur Herstellung eines Fahrradrahmens aus wenigstens zwei Modulen, wobei die Module einzeln hergestellt und an korrespondierenden Verbindungsabschnitten miteinander verbunden werden.

In der Fahrradindustrie gibt es eine große Modellvielfalt. Fast jedes Modell wird überdies auch in unterschiedlichen Größen hergestellt. Dies führt insgesamt dazu, dass sehr viele unterschiedliche Fahrradrahmen in jeweils nicht allzu großen Stückzahlen produziert werden müssen, was sich insgesamt negativ auf die Produktionskosten auswirkt.

Vor diesem Hintergrund wäre es erstrebenswert, im Zusammenhang mit der Produktion von Fahrradrahmen eine Rationalisierung und eine Senkung der Produktionskosten zu erreichen.

Eine besondere Methode der Produktion eines Elektrofahrrades ist bereits aus der DE 10 2015 110 933 A1 bekannt. Dort wird der Fahrradrahmen gefertigt, dass mehrere einzelne Module gefertigt und dann zusammengesetzt werden.

Aus der WO 2014/193245 A1, der CN 103 552 220 A und der DE 43 28 349 A1 sind bereits Verfahren der Fluidinjektionstechnik bekannt. Aus der US 2004/212171 A1 und der DE 10 2015 110933 A1 sind bereits modular aufgebaute Fahrradrahmen bekannt. Schließlich befasst sich die DE 10 2012 200 594 A1 mit einem Verfahren zur Herstellung eines Fahrradrahmens, der aus recyclebarem Polymer herhergestellt ist.

Aufgabe der Erfindung ist es, ein unabhängig vom Typ des Rahmens anwendbares Konzept zur Rationalisierung der Herstellung und Senkung der Produktionskosten bereitzustellen, das insbesondere dann vorteilhaft ist, wenn eine breite Modellpalette bedient werden soll.

Vor diesem Hintergrund betrifft die Erfindung ein Verfahren zur Herstellung eines Fahrradrahmens aus wenigstens zwei Modulen mit den Merkmalen des Anspruchs 1. Demnach werden die Module einzeln hergestellt und an korrespondierenden Verbindungsabschnitten miteinander verbunden undwenigstens eines der Module wird anhand eines Spritzgießverfahrens mit der Fluidinjektionstechnik aus thermoplastischem Kunststoff hergestellt. Vorzugsweise werden wenigstens zwei Module oder alle Module anhand eines Spritzgießverfahrens aus Kunststoff hergestellt. Die obenstehenden und nachfolgenden Beschreibungen des Moduls bzw. des Spritzgießverfahrens können jeweils immer nur ein Modul bzw. das Spritzgießverfahren zur Herstellung nur eines Moduls oder aber zwei, mehr oder alle Module bzw. die Spritzgießverfahren zur Herstellung dieser mehreren Module betreffen.

Bei dem erfindungsgemäß hergestellten Rahmen kann es sich um den Rahmen eines herkömmlichen pedalbetriebenen Fahrrads oder eines motorisierten Fahrrads wie beispielsweise eines Elektrofahrrads handeln.

Das erfindungsgemäße Verfahren ermöglicht eine Steigerung der Modellvielfalt und kürzere Lieferzeiten bei einer besseren ökologischen Bilanz. Bevorzugte Ausführungsformen ergeben sich aus dem Wortlaut der Ansprüche. Vorteile der Erfindung sind in den nachfolgend diskutierten bevorzugten Varianten des Verfahrens besonders ausgeprägt.

Erfindungsgemäß ist also vorgesehen, dass ein Fahrradrahmen in wenigstens zwei Baugruppen (Module) geteilt wird, beispielsweise in ein Hinterteil und ein Vorderteil, die über eine definierte Schnittstelle und bevorzugt Schnittebene sodann verbunden werden können. Die Verbindung ist vorzugsweise fix und unlösbar.

Die Module können grundsätzlich stoffschlüssig, kraftschlüssig oder formschlüssig verbunden werden. Konkret geeignete stoffschlüssige Verbindungsformen umfassen beispielsweise Klebeverbindungen oder Schweißverbindungen. Konkret geeignete kraftschlüssige Verbindungsformen umfassen Schraubverbindungen. Konkret geeignete formschlüssige Verbindungsformen umfassen beispielsweise Nietverbindungen oder Clipverbindungen. Mechanische Verbindungselemente wie Schrauben, Hülsen oder dergleichen können im Rahmen des Spritzgießverfahrens als beispielsweise metallisches Einlegeteil in die Kavität des Spritzgießwerkzeugs eingelegt und umspritzt werden.

In einer Ausführungsform ist vorgesehen, dass die Module anhand eines mechanischen Verfahrens aneinander fixiert oder vorfixiert werden, wobei an den Verbindungsabschnitten der Module vorzugsweise korrespondierende Schienen angeformt oder angebracht werden und diese Schienen zur Fixierung oder Vorfixierung der Module ineinander geschoben werden. Beispielsweise kann vorgesehen sein, dass die Module entlang der Schienen bis zu einer Endstellung ineinander geschoben werden und die Endstellung dann mit mechanischen Verbindungselementen wie Schrauben oder Nieten fixiert wird. Die Schienen können beispielsweise im Rahmen des Spritzgießverfahrens als integraler Bestandteil der Module gebildet werden. Sie können ebenfalls aus Kunststoff gegossen werden oder als beispielsweise metallisches Einlegeteil in die Kavität des Spritzgießwerkzeugs eingelegt und umspritzt werden.

In einer Ausführungsform ist vorgesehen, dass es sich bei den Modulen um ein Vorderteil und ein Hinterteil handelt, wobei das Hinterteil den Hinterbau, das Sattelrohr und das Tretlager umfasst, wobei das Vorderteil das Steuerrohr, das Ober- und/oder Unterrohr und eine im verbundenen Zustand der Module parallel zum Sattelrohr verlaufende Verbindungsleiste umfasst, und wobei die Verbindungsabschnitte durch das Sattelrohr und die Verbindungsleiste gebildet werden. Mit dieser Konstruktion kann erreicht werden, dass die beiden Module eine in etwa ähnliche Größe haben und sich der Verbindungsabschnitt über eine signifikante Länge erstreckt, sodass eine stabile Verbindung und eine ausreichende Steifigkeit des Rahmens erreicht werden können. Zusätzliche Stabilität wird durch die Zuordnung des Tretlagers zum Hinterbau erreicht, der im fertig montierten Zustand das Antriebsrad hält.

Durch eine Kombination von verschiedenen Hinter- und Vorderteilen kann eine hohe Modellvielfalt realisiert werden. Beispielsweise lassen sich durch die Kombination eines Hinterteils mit unterschiedlichen Vorderteilen Herren- und Damenversionen eines Rads herstellen. Ferner können durch den Anbau unterschiedlicher Vorderteile an dasselbe Hinterteil auch unterschiedliche Radtypen wie beispielsweise Lastenfahrräder hergestellt werden.

Sofern am Sattelrohr und an der Verbindungsleiste ein vertikales Schienensystem vorgesehen ist, kann beispielsweise das Hinterteil durch vertikale Verschiebung am Vorderteil vorfixiert werden die Endstellung kann mit einem mechanischen Fixierungselement wie beispielsweise einem Stift oder Bolzen fixiert werden.

In einer Ausführungsform ist vorgesehen, dass das Spritzgießverfahren an einer Spritzgießmaschine durchgeführt wird, deren Werkzeughälften Stammplatten und Konturplatten aufweisen, wobei die Stammplatten lösbar an den Aufspannplatten der Spritzgießmaschine befestigt sind und wobei die Konturplatten lösbar an den Stammplatten befestigt sind und die Spritzgießkavität für das Modul bilden. Es kann vorgesehen sein, dass die Kavität für das gesamte Modul durch zwei gegenüberliegende Konturplatten definiert wird. Wenn hier von Werkzeughälften gesprochen wird, dann ist mit dieser Terminologie keine Beschränkung auf genau zwei Hälften beabsichtigt. Ebenfalls können drei oder mehrere "Hälften" eine Kavität bilden.

In dieser Ausführungsform kann für große Stückzahlen eine Kostenreduktion erreicht werden. Denn es wird nicht für jede Variante eines Moduls ein insgesamt eigenes Spritzgießwerkzeug benötigt, sondern für ähnliche Module, beispielsweise Herren- und Damenausführungen des Vordermoduls oder identische Module unterschiedlicher Größe zur Bereitstellung unterschiedlicher Rahmengrößen, können dieselben Stammplatten verwendet werden. Die Individualisierung erfolgt dann durch Tausch der Konturplatten. So kann die Stammplatte auch bei der Herstellung unterschiedlicher Modulvarianten immer an den Aufspannplatten der Spritzgießmaschine befestigt bleiben und muss lediglich für Wartungen oder Reparaturen abgenommen werden.

Die Konturplatten können vor deren Befestigung an der Aufspannplatte auf Betriebstemperatur vorgewärmt und/oder mit allen benötigten Anschlüssen, beispielsweise für eine an der Konturplatte angeordnete Injektordüse versehen werden. So können die Rüstzeiten bei einem Wechsel der Modulvarianten verkürzt werden.

Die Konturplatten können anhand eines Schnellspannsystems mit der Stammplatte verbunden werden. Geeignete Schnellspannsysteme umfassen mechanische, pneumatische, hydraulische oder elektromagnetischen Schnellspannsysteme.

In einer Ausführungsform ist vorgesehen, dass das Spritzgießverfahren an einer Spritzgießmaschine durchgeführt wird, in deren Kavität ein Wechseleinsatz eingelegt ist. Es kann also in einer Ausführungsform vorgesehen sein, dass in der Kavität, die selbst durch auswechselbare Konturplatten gebildet wird, noch zusätzlich ein auswechselbarer Einsatz vorhanden ist. So wird die Flexibilität in der Umgestaltung der Kavität noch weiter erhöht. Wechseleinsätze können beispielsweise sinnvoll sein, um Hinterschneidungen abzubilden, um kleinere Änderungen zwischen Modulvarianten zu realisieren, um eine Teilung der Kavität zu erreichen und zwei Module gleichzeitig produzieren zu können oder um Injektionsdüsen an bestimmten Positionen anzubringen.

Es kann ein Auswurfsystem vorgesehen sein, mit dem das gegossene Modul aus der Kavität ausgeworfen wird. Das Auswurfsystem der Konturplatte kann beispielsweise selbstbetätigt sein oder anhand eines Aktors betätigt werden, der dem nicht wechselbaren Teil der Spritzgießmaschine zugeordnet ist. Die Betätigung des Auswurfsystems kann beispielsweise mechanisch, hydraulisch, pneumatisch oder elektromechanisch erfolgen.

Die Konturplatten und die Stammplatten können Zentriereinrichtungen in Form von beispielsweise Führungsbolzen und korrespondierenden Löchern aufweisen, die in Richtung der Schließbewegung der Aufspannplatten stehen. Die Zentriereinrichtungen können an der Vorderseite und der Rückseite der Konturplatten sowie an der Vorderseite der Stammplatten angeordnet sein. So wird eine schnelle und präzise Montage ebenso ermöglicht wie ein präzises Schließen der Konturplatten im Betrieb. Ferner können auch beispielsweise Koni, Stifte, Ringe und entsprechende Gegenkavitäten als Zentriereinrichtungen dienen. Des Weiteren ist denkbar, dass die Konturplatten und/oder die Wechseleinsätze mit Führungsschienen ausgerüstet sind und beim Rüsten der Spritzgießmaschine an diesen Führungsschienen bis an eine Endposition aufgeschoben werden.

Die Konturplatten und/oder die Wechseleinsätze können Fluidführungskanäle aufweisen und vor dem Betrieb oder während des Betriebs durch eine Fluidführung in diesen Kanälen gekühlt oder beheizt werden. Als geeignete Fluide kommen beispielsweise Öl oder Wasser in Betracht. Gegebenenfalls wird das Fluid über die Stammplatte in die Konturplatte eingeleitet, wobei die Stammplatte in dieser Variante einen Fluidführungskanal und beide Platten geeignete Schnittstellen wie beispielsweise Schnellkupplungssysteme aufweisen. Die Konturplatten und/oder die Wechseleinsätze können Sensoren wie beispielsweise Druck- und/oder Temperatursensoren aufweisen und dass während des Betriebs eine Temperatur- und/oder Druckmessung erfolgt.

In einer Ausführungsform ist vorgesehen, dass im Rahmen des Verfahrens eine Folie in die Kavität eingelegt wird, die dann hinterspritzt wird (In-Mould-Verfahren). Zum Halten der Folie vor dem Hinterspritzen kann vorgesehen sein, dass die Konturplatten und/oder die Wechseleinsätze Evakuierungskanäle aufweisen.

In einer Ausführungsform ist vorgesehen, dass das Modul hohle Rohre umfasst und im Rahmen des Spritzgießverfahrens eine Fluidinjektion durchgeführt wird. Wenn hier von einem Rohr die Rede ist, kann dieses im Querschnitt rund, oval, mehreckig oder beliebig anders geformt sein. Geeignete Fluide umfassen beispielsweise Gas (GIT) wie Stickstoff, Kohlendioxid oder Luft, Wasser (WIT) oder Mischungen daraus. Geeignete Verfahrensführungen umfassen beispielsweise ein Masserückdrück- oder ein Nebenkavitätenverfahren, wobei die Kavität vollständig mit einer Kunststoffschmelze gefüllt und eine flüssige Seele dann mittels Fluid oder Projektil zurück in das Schneckenaggregat oder in eine Nebenkavität gedrückt wird. Die Nebenkavität kann beispielsweise ebenfalls in der Konturplatte oder in der Stammplatte angeordnet sein. Gegebenenfalls ist eine Schließvorrichtung vorhanden, anhand der die Nebenkavität geöffnet und geschlossen wird.

Weitere geeignete Verfahrensführungen umfassen sogenannte Aufblasverfahren, in denen das Bauteil teilgefüllt und die Schmelze dann durch ein Fluid aufgeblasen wird. Im Falle eines Aufblasverfahrens kann ein Schlauch vorhanden sein, in den das Fluid injiziert wird. So wird ein unmittelbarer Kontakt zwischen dem Fluid und der Kunststoffschmelze vermieden.

In einer Ausführungsform ist vorgesehen, dass die Fluidinjektion durch einen Injektor durchgeführt wird, dessen Düse in der Konturplatte oder im Wechseleinsatz angeordnet ist. Im Falle einer Verwendung von wechselbaren Konturplatten ist die Injektordüse vorzugsweise an der Konturplatte oder am Wechseleinsatz vorgesehen, da diese Platte bzw. dieser Einsatz die Kavität definieren und daher eine unmittelbare und präzise Injektion ermöglicht wird.

Generell kann vorgesehen sein, dass die Injektoren am Fließwegende der Kavität positioniert werden.

Es kann vorgesehen sein, dass die Konturplatte oder der Wechseleinsatz mit Schiebern ausgerüstet sind, die im Verfahren eine Materialverschiebung bewirken. Derartige Schieber werden auch als Kernzüge bezeichnet. Die Betätigung der Schieber kann beispielsweise mechanisch, hydraulisch, pneumatisch oder elektromechanisch erfolgen.

In einer Ausführungsform ist vorgesehen, dass im Spritzgießverfahren zur Herstellung des Moduls wenigstens ein Fasergebilde, Prepreg und/oder vorzugsweise metallisches Einlegeteil in die Spritzgießkavität eingelegt wird. Die Fasergebilde können Gelege oder Geflechte aus beispielsweise Langfasern oder Kurzfasern sein. Als Fasermaterial kommen Kohlenstoff, Glas oder auch Naturfasern in Betracht. Solche Einlegeteile können dem Rahmen zusätzliche Steifigkeit verleihen. Weitere denkbare Einlegeteile zur Erhöhung der Steifigkeit umfassen Bleche oder Rohre aus Metall (Aluminium oder Stahl), Organobleche oder Organosheets. Weitere geeignete Einlegeteile umfassen beispielsweise Folien für ein In-Mould-Labelling, Tret- und/oder Lenkkopflager, Sensoren wie beispielsweise eine GPS-Sensorik, gewindetragende Metallteile, Reflektoren oder Kabel und Kabelführungen für elektrische Leitungen, Bremsleitungen oder Lichtleiter.

In einer Ausführungsform ist vorgesehen, dass ein Modul, vorzugsweise das Hinterteil einen Elektromotor und/oder einen Akku umfasst. Auch diese Elemente oder Mittel zur Montage dieser Elemente können als Einlegeteil in die Kavität eingelegt werden. Sofern Montagemittel in die Kavität eingelegt und umspritzt werden, kann die Montage des Motors und des Akkus nachträglich erfolgen. Im Falle eines Motors kann das Modul auch eine Ausnehmung umfassen, in dem nach der Entformung der Motor eingelegt wird.

In einer Ausführungsform ist vorgesehen, dass es sich bei dem Kunststoff um einen thermoplastischen Kunststoff handelt. Geeignete Kunststoffe umfassen beispielsweise Polyamide wie Polyamid 12, Polyamid 6 oder Polyamid 6.6, Polypropylen, Polyethylen, Polystyrol, Polyethersulfon, Polyetherketon, Polyphenylensulfid, Polyvinylchlorid, Polyester, Acrylnitril-Butadien-Styrol oder thermoplastische Elastomere. Bevorzugte Beispiele umfassen Polybutylenterephtalat oder Polyterephtalatethylen. Es kann vorgesehen sein, dass der Kunststoff im nicht vernetzten oder teilvernetzten Zustand, beispielsweise als Caprolactam und gegebenenfalls mit einem Aktivator in das Spritzgießwerkzeug eingespritzt und im beheizten Werkzeug polymerisiert wird. Der Kunststoff kann dispergierte Kurz- oder Langfasern aus beispielsweise Kohlenstoff oder Glas aufweisen. So kann erreicht werden, dass die Rahmen recycelbar sind. Durch geeignete Einlegeteile wie Fasergebilde kann dennoch eine ausreichende Rahmensteifigkeit erreicht werden.

In einer Ausführungsform ist vorgesehen, dass in der Herstellung wenigstens eines Moduls ein Mehrkomponentenspritzgießverfahren zur Anwendung kommt und die Komponente aus wenigstens zwei unterschiedlichen Kunststoffen gefertigt wird. Für den Mehrkomponentenspritzguss können je nach Rahmengeometrie unterschiedliche Techniken und Bauformen der Spritzgießmaschine zum Einsatz kommen, wie beispielsweise Zweiplattentechnik, Dreiplattentechnik, Wendeplattentechnik, eine Indexplattentechnik, Etagentechnik, Tandemtechnik, Umsatztechnik und/oder ein Drehtellerwerkzeug.

In einer Ausführungsform ist vorgesehen, dass im Rahmen des Verfahrens eine thermoplastische Kunststoffschmelze in die geschlossene Kavität der Spritzgießmaschine eingebracht wird, dass anschließend ein Fluid zur Materialverdrängung und zur Schaffung eines Hohlraums injiziert wird und dass letztendlich die Kavität geöffnet und das fertig gegossene Bauteil ausgeworfen wird. Vorzugsweise ist vorgesehen, dass in dem durch das Fluid gebildeten Hohlraum nach dem Injizieren des Fluides zumindest kurzzeitig ein gegenüber dem Umgebungsdruck erhöhter Druck aufrechterhalten wird. Ferner kann vorgesehen sein, dass Fluid im durch das Fluid gebildeten Hohlraum zirkuliert wird, um eine Kühlung zu erreichen. Auch kann vorgesehen sein, dass das Fluid sodann aus dem Hohlraum abgesaugt wird.

Mit dem vorgenannten Verfahren kann ein Fahrradrahmen hergestellt werden bestehend aus wenigstens zwei separaten Modulen, die an korrespondierenden Verbindungsabschnitten miteinander verbunden sind, wobei es sich bei den Modulen um spritzgegossene Kunststoffteile handeltBevorzugte Ausgestaltungen ergeben sich demgemäß aus der Beschreibung des erfindungsgemäßen Verfahrens.

Weitere Einzelheiten und Vorteile der Erfindung ergeben sich aus den nachfolgend anhand der Figuren diskutierten Ausführungsbeispielen. In den Figuren zeigen:
- Figur 1:: ein Hinterteil eines erfindungsgemäßen Fahrradrahmens;
- Figur 2:: ein Vorderteil eines erfindungsgemäßen Fahrradrahmens;
- Figur 3:: einen aus dem Hinterteil gemäß Figur 1 und dem Vorderteil gemäß Figur 2 zusammengesetzten erfindungsgemäßen Fahrradrahmen;
- Figur 4:: ein Fahrrad umfassend den Fahrradrahmen gemäß Figur 3;
- Figur 5:: ein alternatives Hinterteil eines erfindungsgemäßen Fahrradrahmens;
- Figur 6:: einen aus dem Hinterteil gemäß Figur 5 und dem Vorderteil gemäß Figur 2 zusammengesetzten erfindungsgemäßen Fahrradrahmen;
- Figur 7:: ein Fahrrad umfassend den Fahrradrahmen gemäß Figur 6;
- Figur 8:: ein alternatives Vorderteil eines erfindungsgemäßen Fahrradrahmens;
- Figur 9:: einen aus dem Hinterteil gemäß Figur 1 und dem Vorderteil gemäß Figur 8 zusammengesetzten erfindungsgemäßen Fahrradrahmen;
- Figur 10:: ein Fahrrad umfassend den Fahrradrahmen gemäß Figur 9;
- Figur 11:: ein wiederum alternatives Vorderteil eines erfindungsgemäßen Fahrradrahmens;
- Figur 12:: einen aus dem Hinterteil gemäß Figur 1 und dem Vorderteil gemäß Figur 11 zusammengesetzten erfindungsgemäßen Fahrradrahmen;
- Figur 13:: ein Fahrrad umfassend den Fahrradrahmen gemäß Figur 12; und
- Figur 14:: Ansichten des Spritzgießwerkzeugs einer Spritzgießmaschine.

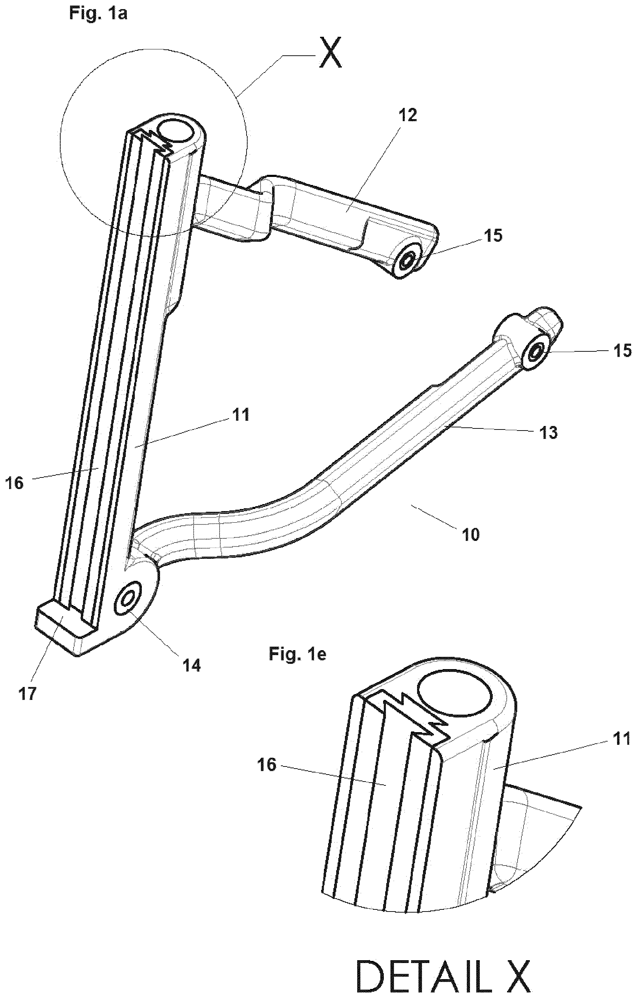

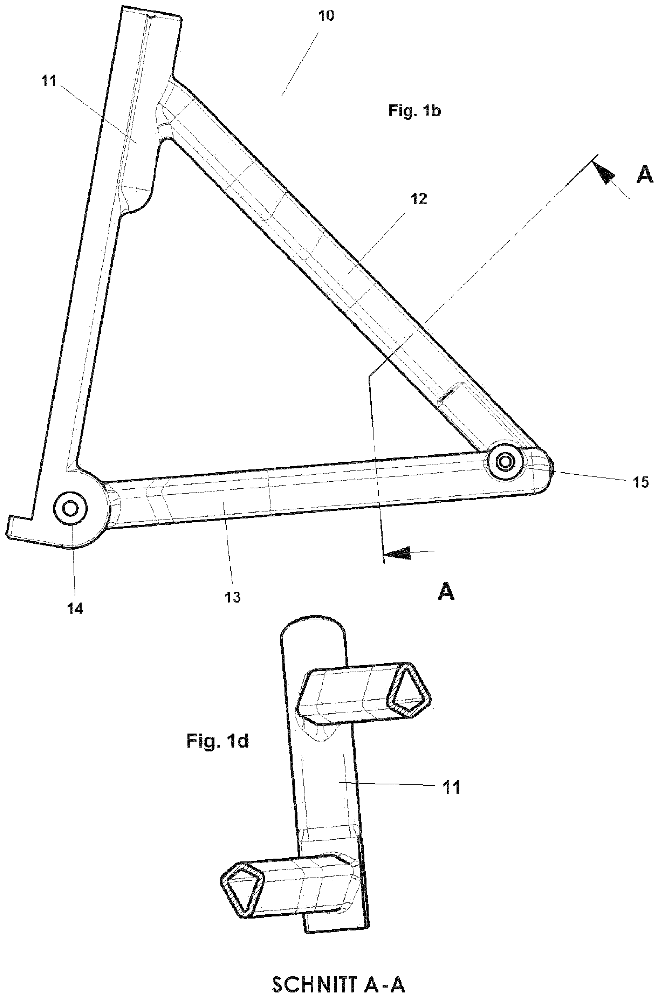

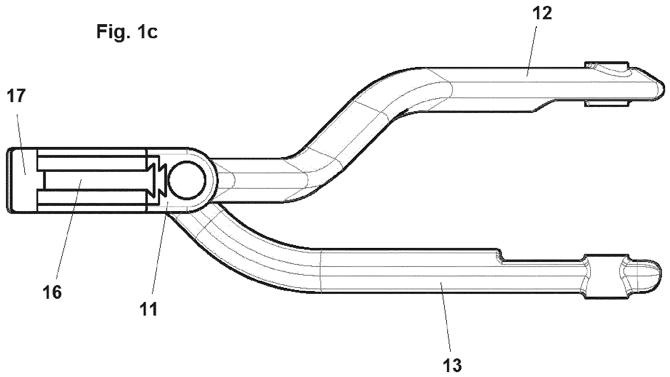

Figur 1 zeigt ein Modul 10 eines erfindungsgemäßen Fahrradrahmens in unterschiedlichen Ansichten. Das Modul 10 stellt den Hinterbau des Rahmens dar und ist für die Zusammenstellung eines Diamantrahmens geeignet. Es umfasst ein Sattelrohr 11 sowie zwei von diesem Sattelrohr 11, eine Sitzstrebe 12 und eine Kettenstrebe 13. Am unteren Ende des Sattelrohres 11 befindet sich eine Bohrung 14 zur Aufnahme des Tretlagers. An deren hinteren Enden der Streben 12 und 13 befinden sich fluchtende Bohrungen 15 zur Aufnahme der Hinterradachse. Die Streben 12 und 13 sind in der gezeigten Ausführungsform jeweils lediglich einseitig ausgebildet. Eine derartige Konstruktion ist bei Fahrrädern zwar eher selten, kann jedoch für eine Spritzgussherstellung besonders vorteilhaft sein.

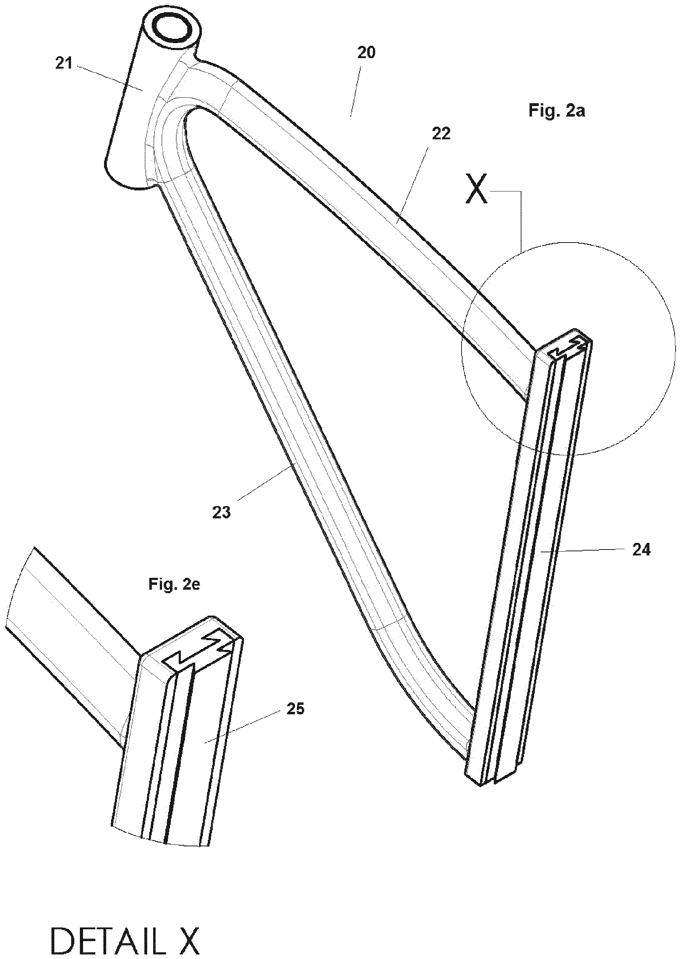

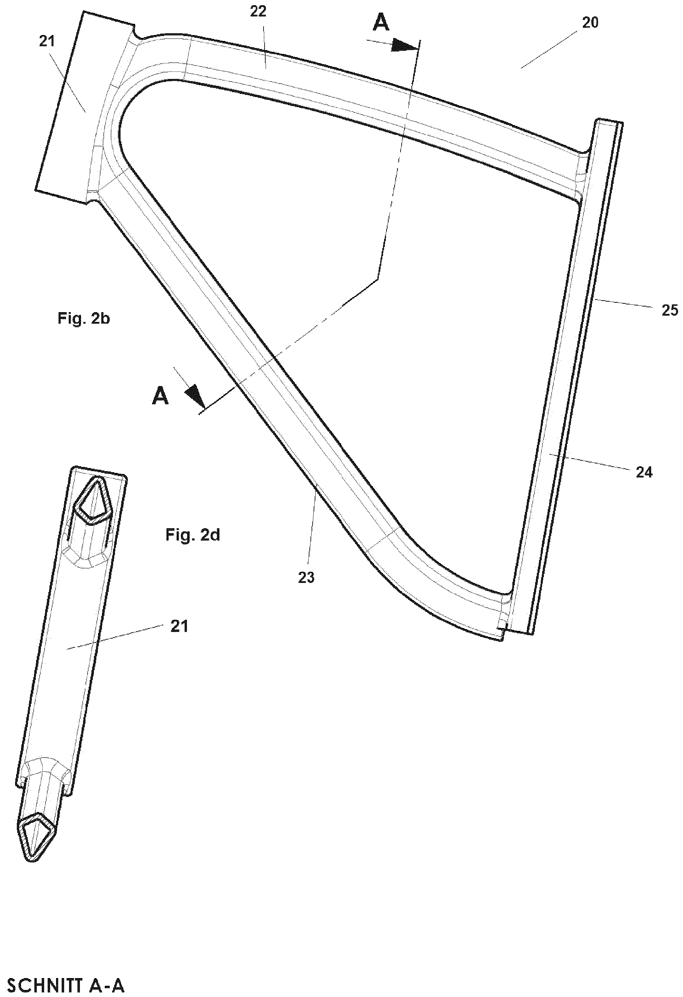

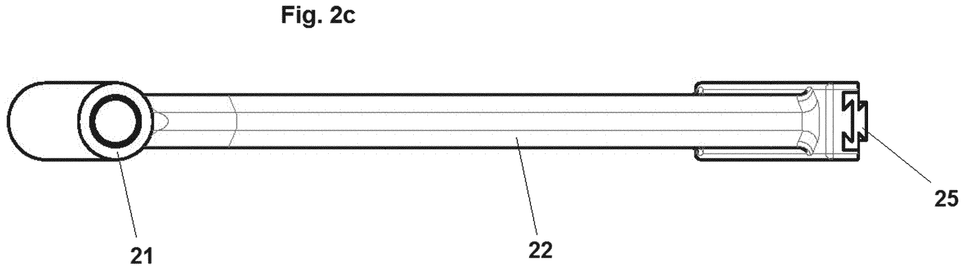

Figur 2 zeigt ein weiteres Modul 20 eines erfindungsgemäßen Fahrradrahmens in unterschiedlichen Ansichten. Das Modul 20 bildet das Hauptrahmendreieck eines Diamantrahmens eines klassischen Herrenrades ab. Es umfasst ein Steuerrohr 21, ein Oberrohr 22, ein Unterrohr 23 und eine Verbindungsleiste 24. Die Verbindungsleiste 24 erstreckt sich an Stelle eines Sattelrohres zwischen Oberrohr 22 und Unterrohr 23 und bildet gemeinsam mit diesen das Hauptrahmendreieck.

Das Sattelrohr 11, die Sitzstrebe 12 und die Kettenstrebe 13 des Moduls 10 sowie das Steuerrohr 21, das Oberrohr 22 und das Unterrohr 23 des Moduls 20 sind als hohle Rohre ausgebildet, wie dies zumindest im Falle von Sattelrohr 11, Sitzstrebe 12, Kettenstrebe 13 und Steuerrohr 21 in den Figuren zu erkennen ist. Lediglich die dünne Verbindungsleiste 24 ist massiv ausgebildet.

Die Verbindungsleiste 24 weist an der Rückseite eine Schiene 25 mit einem von der Rückseite nach hinten abstehenden Steg auf. Dieser Steg erstreckt sich vertikal über die gesamte Höhe der Verbindungsleiste 24. Er hat einen trapezförmigen Querschnitt und verbreitert sich mit zunehmendem Abstand von der Rückseite der Verbindungsleiste 24.

Das Sattelrohr 11 weist an der Vorderseite eine Schiene 16 mit einer nutförmigen Vertiefung auf. Diese Nut erstreckt sich vertikal von der Oberseite des Sattelrohres 11 bis fast ganz zu dessen unterem Ende. An der Unterseite werden die Schiene 16 und deren Nut von einem Anschlag 17 begrenzt. Die Nut hat einen trapezförmigen Querschnitt und verbreitert sich mit zunehmender Tiefe. Dieser Querschnitt der Nut korrespondiert zum Querschnitt des Stegs an der Schiene 25 der Verbindungsleiste 24.

Die Schienen 16 und 25 sind in entsprechende vertikale und längliche Ausnehmungen an Sattelrohr 11 und Verbindungsleiste 24 eingesetzt, wie dies aus den Figuren zu erkennen ist.

Anhang der Schienen 16 und 25 kann das Vorderteil 20 mit dem Hinterteil 10 verbunden werden, in dem der Steg der Schiene 25 des Vorderteils 20 an der Oberseite der Nut der Schiene 16 des Hinterteils 10 ansetzt und von oben in diese Nut eingeschoben wird, bis er an den Anschlag 17 stößt. Ein Abheben des Vorderteils 20 vom Hinterteil 10 nach vorne wird durch den Formschluss verhindert, der sich aus den korrespondierenden trapezförmigen Querschnitten des Stegs der Schiene 25 und der Nut der Schiene 16 ergibt. Die Endposition des Stegs der Schiene 25 am Anschlag 17 kann mit geeigneten Maßnahmen wie beispielsweis durch Verschweißen oder Verbolzen gesichert werden, was in der Figur nicht extra dargestellt ist.

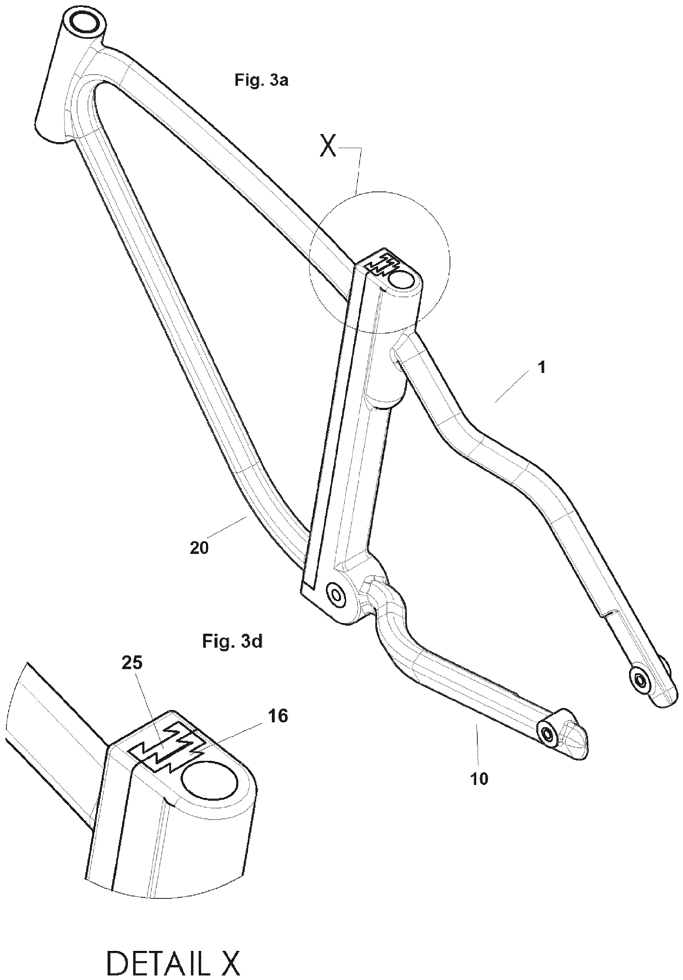

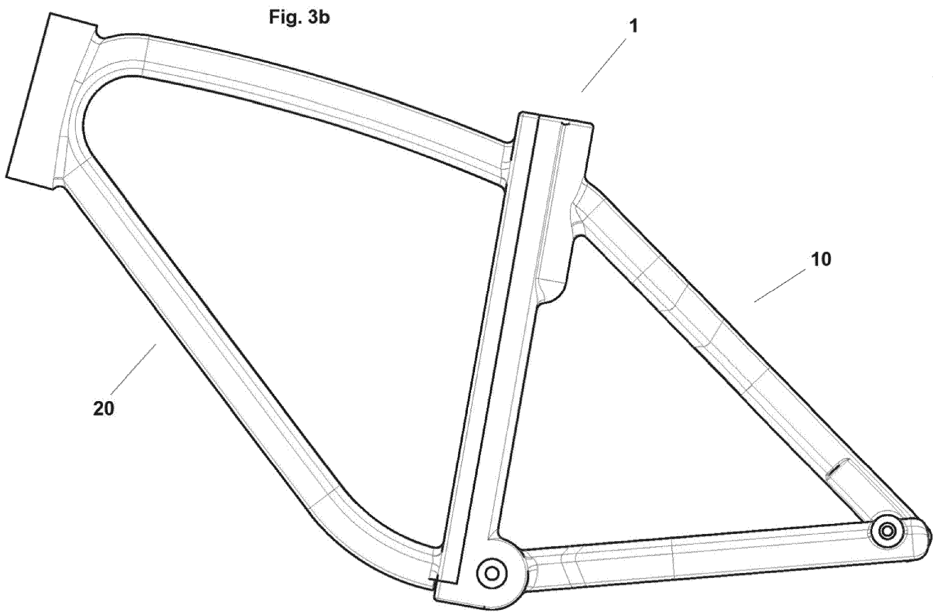

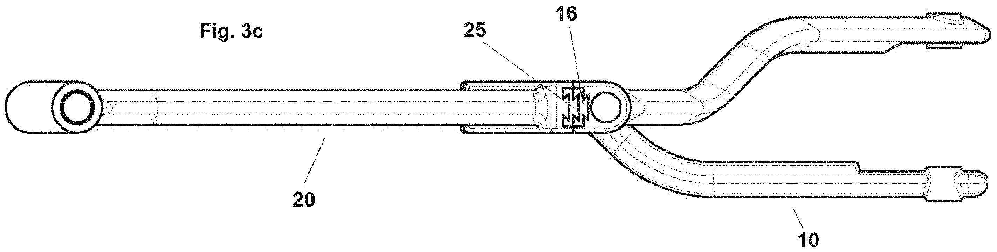

Der so zusammengesetzte Rahmen ist in Figur 3 gezeigt und wird dort allgemein mit dem Bezugszeichen 1 gekennzeichnet.

Die Module 10 und 11 werden jeweils durch Spritzguss aus einem thermoplastischen Kunststoffmaterial gefertigt. Dabei wird in eine geeignete Spritzgusskavität, welche die Außenform der Module wiedergibt, zunächst eine Folie eingelegt und mit Vakuum an die Kavität festgesaugt. Diese Folie soll das äußere Erscheinungsbild der Module definieren. Ferner werden in die Spritzgusskavität Metallteile eingelegt. Diese Metallteile umfassen zumindest die Schienen 16 bzw. 25 sowie Lagerringe in den Bohrungen 14 und 15. Anschließend wird ein thermoplastisches Kunststoffmaterial in die Kavität injiziert und die Kavität wird vollständig gefüllt. Hierbei werden die Einlegeteile und die Folie hinterspritzt. Während einer kurzen Haltezeit erstarrt das Kunststoffmaterial an den Oberflächen. Nach dieser Haltezeit wird über einen Injektor an mehreren Stellen ein Fluid in die Kavität eingespritzt, welches das noch plastische Kunststoffmaterial im Kern der als Hohlbauteile zu fertigenden Rohre verdrängt. Hier kann beispielsweise ein Masserückdrückverfahren oder ein Nebenkavitätenverfahren zur Anwendung kommen. Die Bohrungen 14 und 15 sowie der Hohlraum im Steuerrohr 21 und der Steckbereich für die Sattelstütze im Sattelrohr 11 werden mit Kernzügen eingearbeitet. Nach einer Abkühlung werden die Module 10 und 20 entformt.

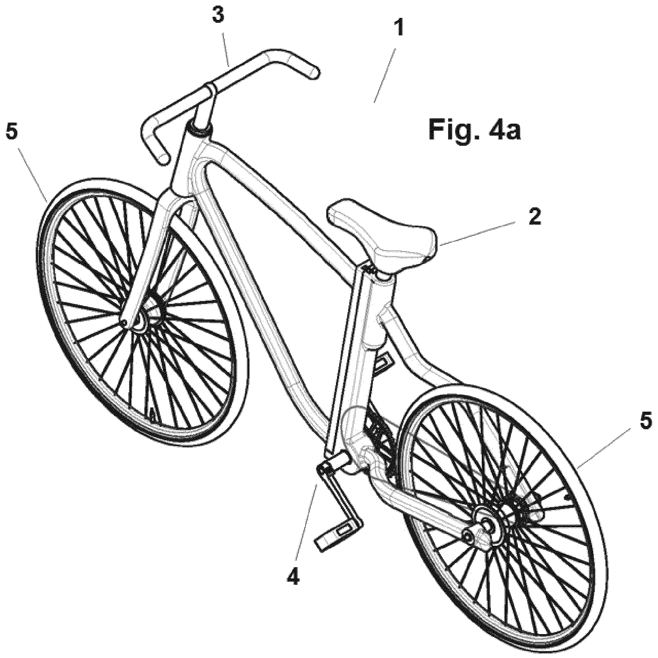

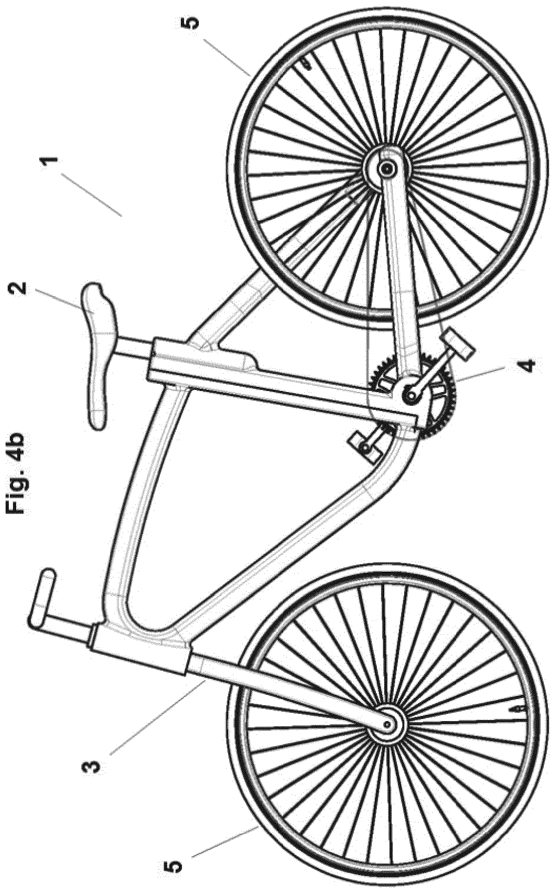

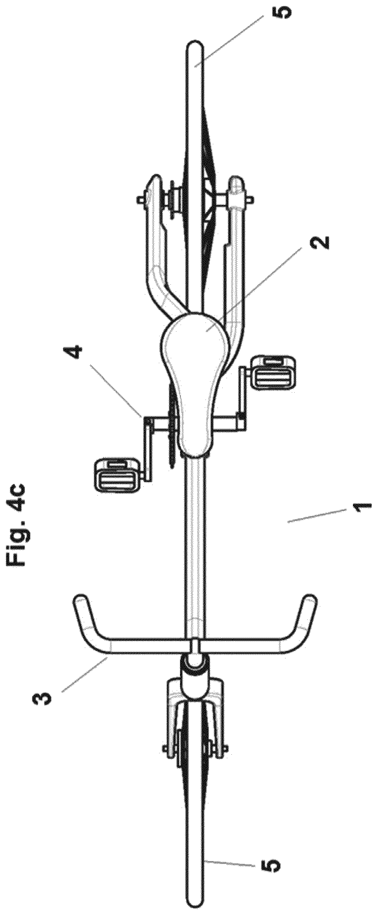

Figur 4 zeigt ein Fahrrad, das unter Verwendung eines Rahmens 1 gemäß Figur 3 gefertigt wurde. Neben dem Rahmen 1 umfasst das Fahrrad einen Sattelaufbau 2, der von oben in das Sattelrohr 11 gesteckt ist. Ferner ist ein Steuersatz 3 mit einem Lenker und einer Gabel vorgesehen, der durch das Steuerrohr 21 gesteckt ist. Letztlich sind die Komponenten 4 umfassend Kurbel, Kettenblätter, Werfer, Kette, Kassette und Schaltwerk am Rad angebracht. Sofern für die Montage metallische Hülsen mit Innengewinde benötigt werden, können diese im Spritzgussverfahren als Einlegeteile in die Kavität eingebracht und umspritzt werden. Nicht dargestellt sind die notwendigen Seilzüge und die notwendigen Hebel am Lenker. Die Räder 5 14 sind mit Schnellspannern an der Gabel vorne bzw. an den Bohrungen 15 hinten festgemacht.

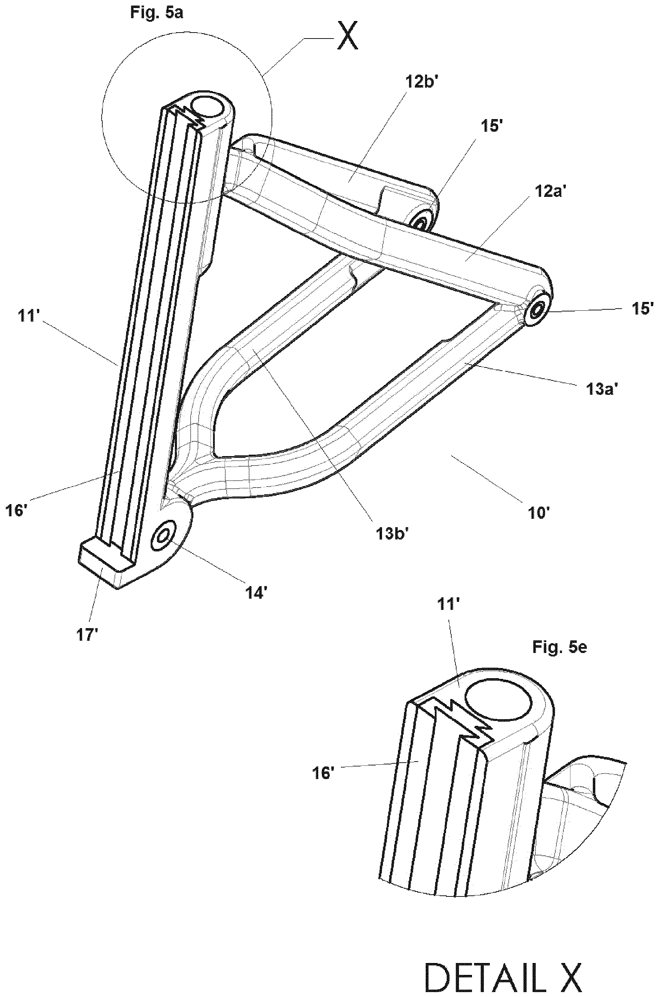

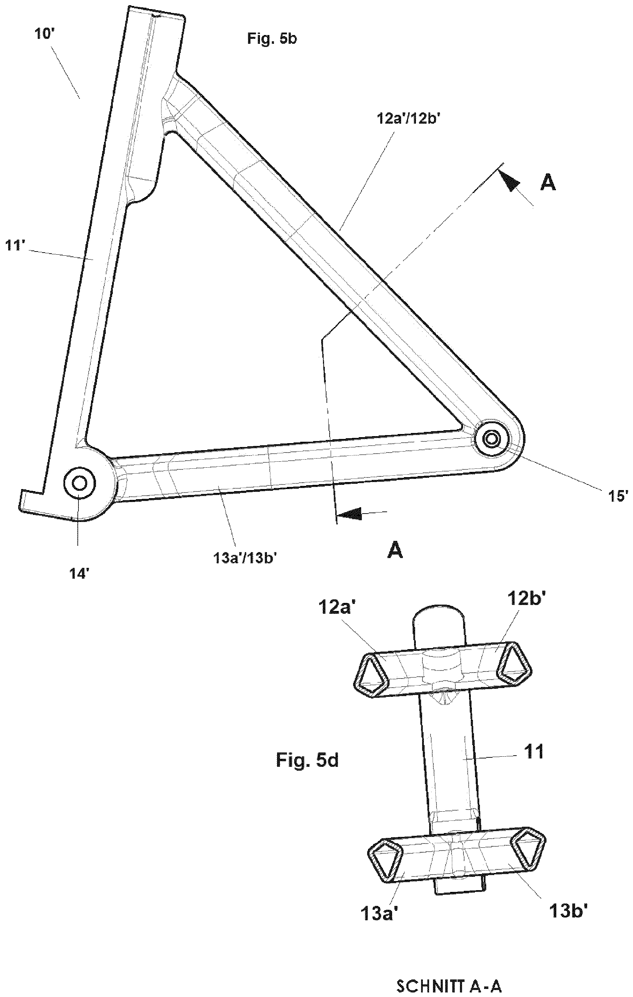

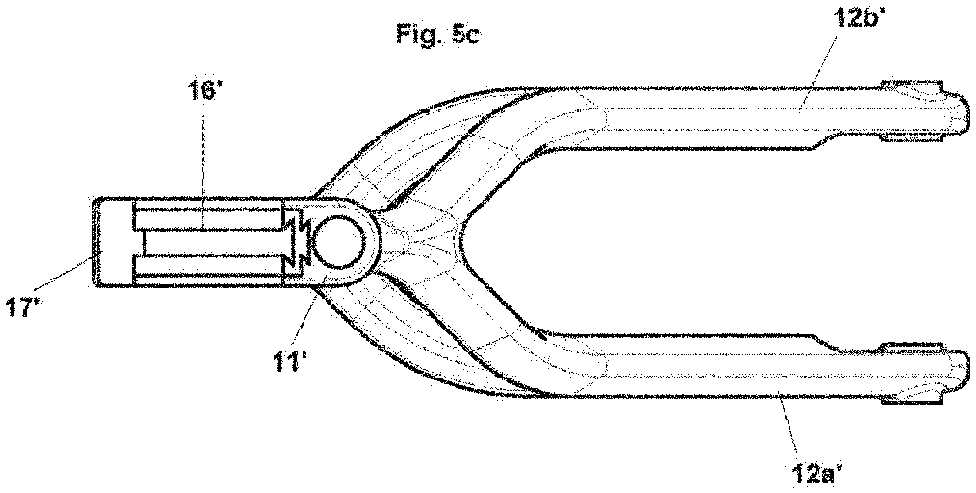

Figur 5 zeigt ein weiteres Modul 10' eines erfindungsgemäßen Fahrradrahmens in unterschiedlichen Ansichten, welches einen gegenüber dem Modul 10 der Figur 1 alternativen Hinterbau des Rahmens darstellt. Dieselben Elemente werden mit denselben Bezugszeichen wie zuvor bezeichnet, außer dass ein Apostroph angefügt wird. Der einzige Unterschied des Moduls 10' gegenüber dem Modul 10 ist die doppelte Ausführung sowohl der Sitzstreben 12a' und 12b' als auch der Kettenstreben 13a' und 13b'. Diese Konstruktion ist bei Fahrrädern am häufigsten und aus Gründen der Verwindungssteifigkeit gegenüber der Ausführung gemäß Figur 1 zu bevorzugen, in der Spritzgussherstellung jedoch etwas anspruchsvoller zu realisieren.

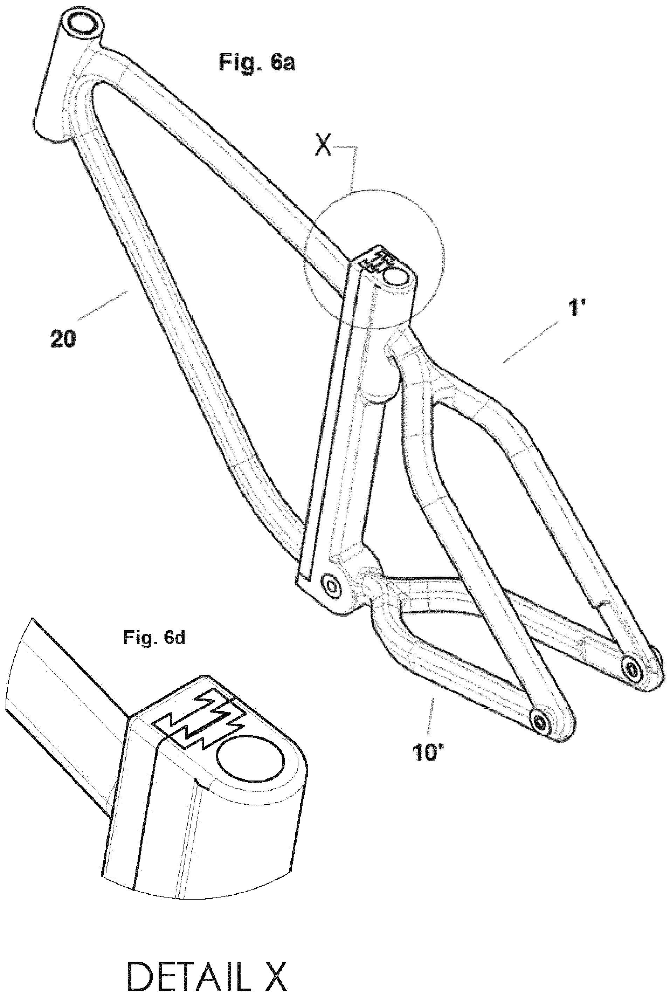

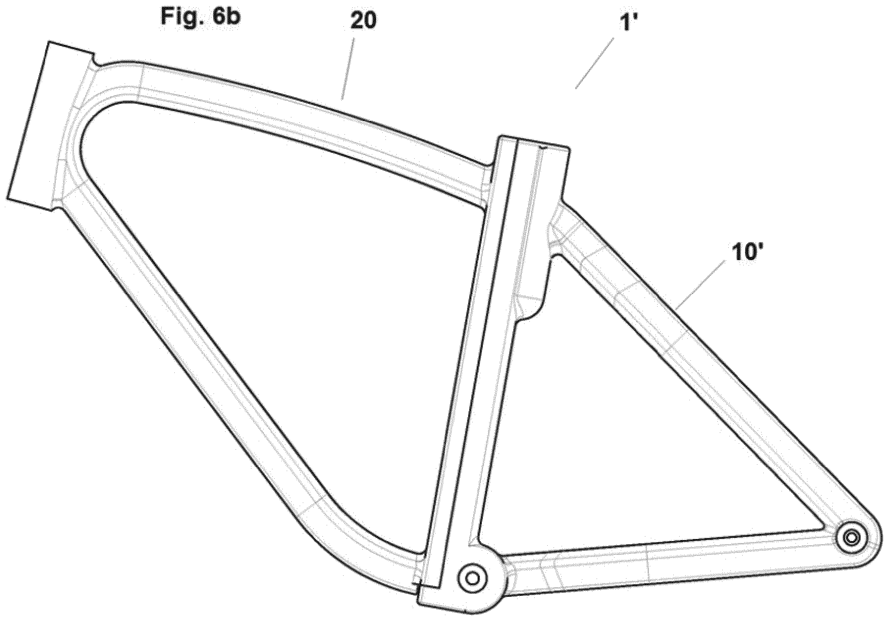

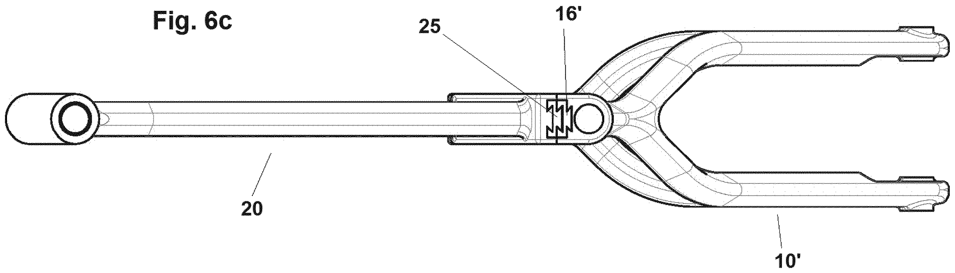

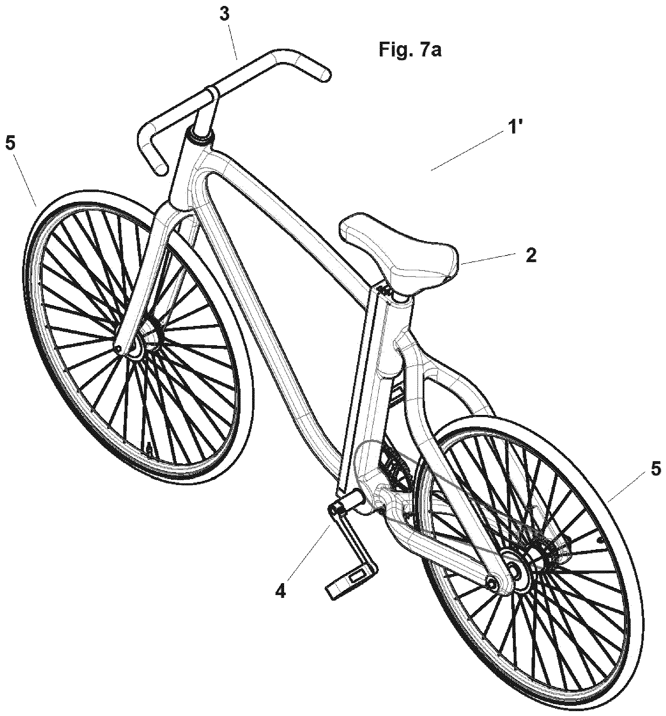

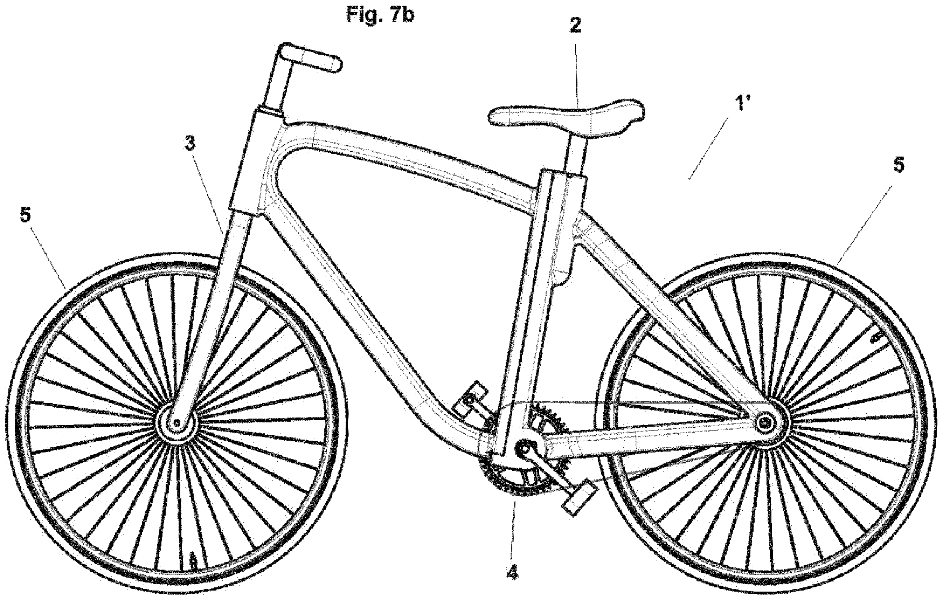

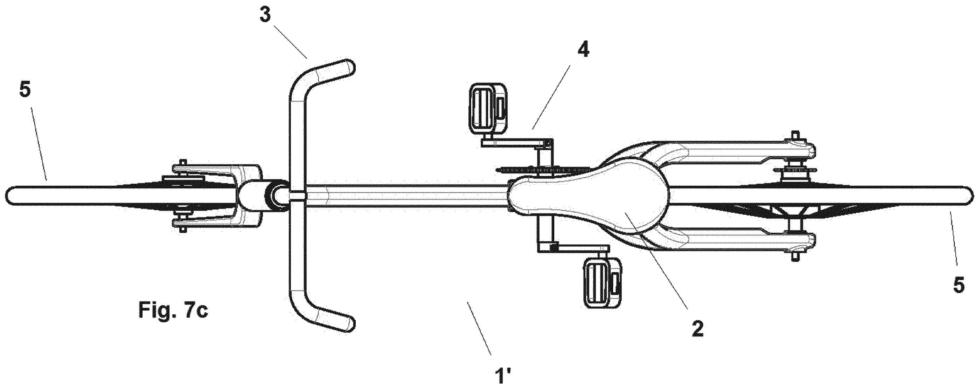

Dieses Modul 10' der Figur 5 kann mit dem Modul 20 der Figur 2 zu einem anderen Fahrradrahmen 1' zusammengefügt werden, der in Figur 6 dargestellt ist und die Grundlage für das in Figur 7 dargestellte Fahrrad bildet.

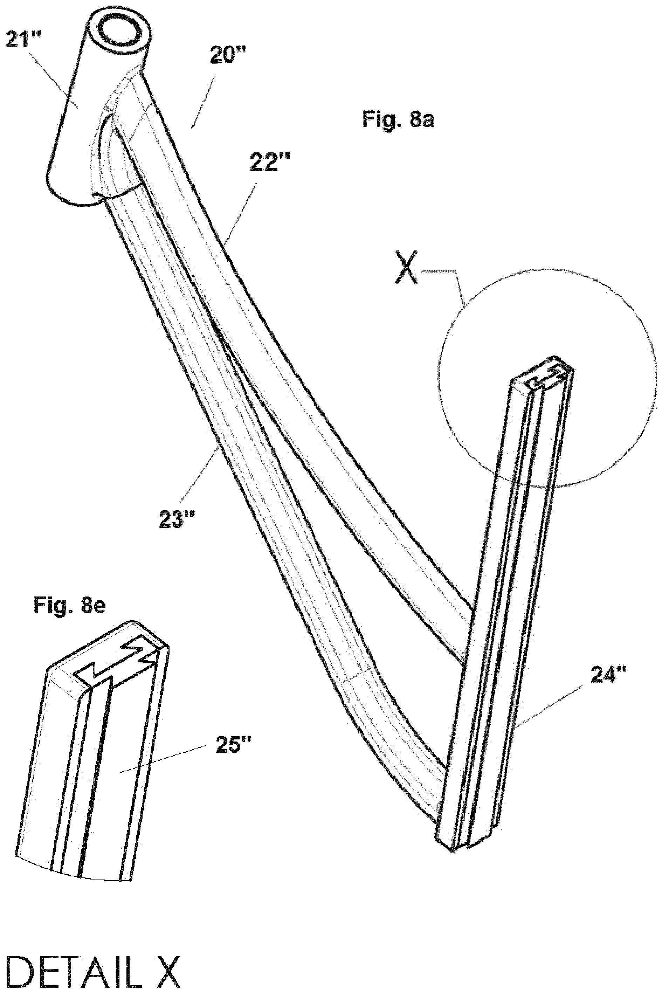

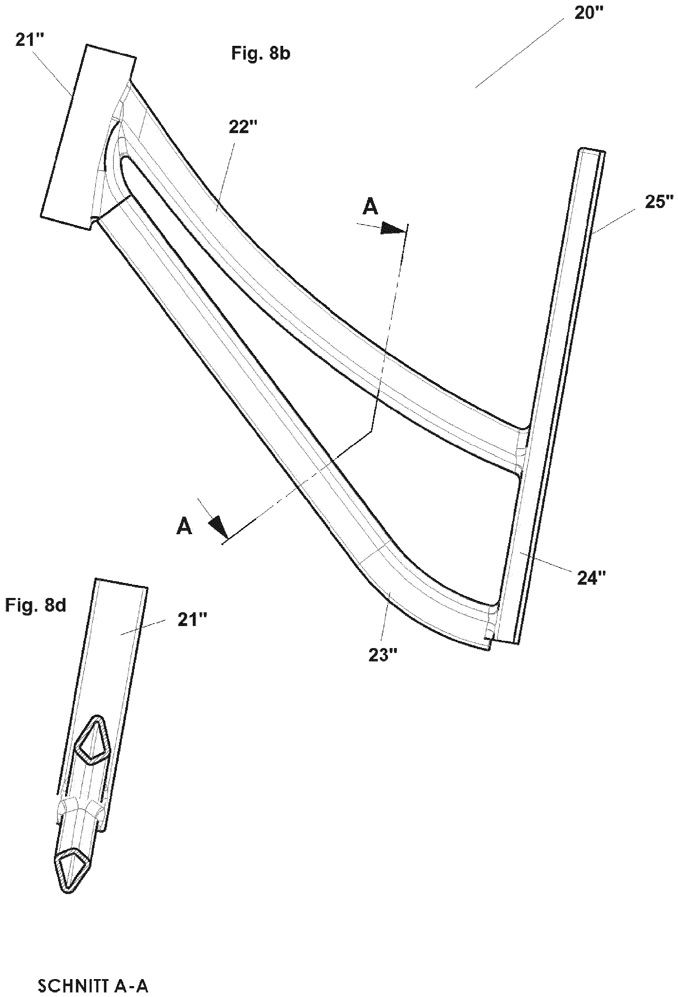

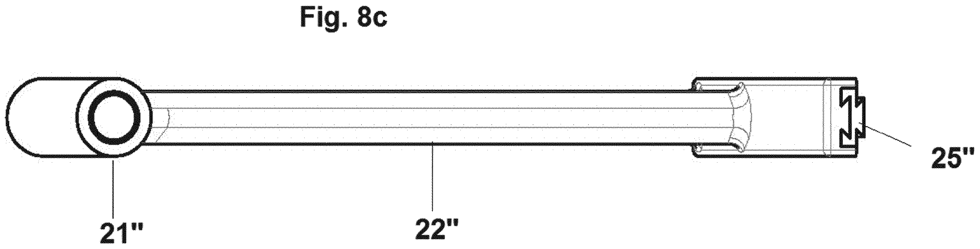

Figur 8 zeigt ein weiteres Modul 20" eines erfindungsgemäßen Fahrradrahmens in unterschiedlichen Ansichten, welches einen gegenüber dem Modul 20 der Figur 2 alternativen Vorderteil des Rahmens darstellt. Dieselben Elemente werden mit denselben Bezugszeichen wie zuvor bezeichnet, außer dass zwei Apostrophe angefügt werden. Der einzige Unterschied des Moduls 20" gegenüber dem Modul 20 liegt in der Absenkung des Oberrohres 22", sodass das Modul 20" das Hauptrahmendreieck eines klassischen Damenrades abbildet.

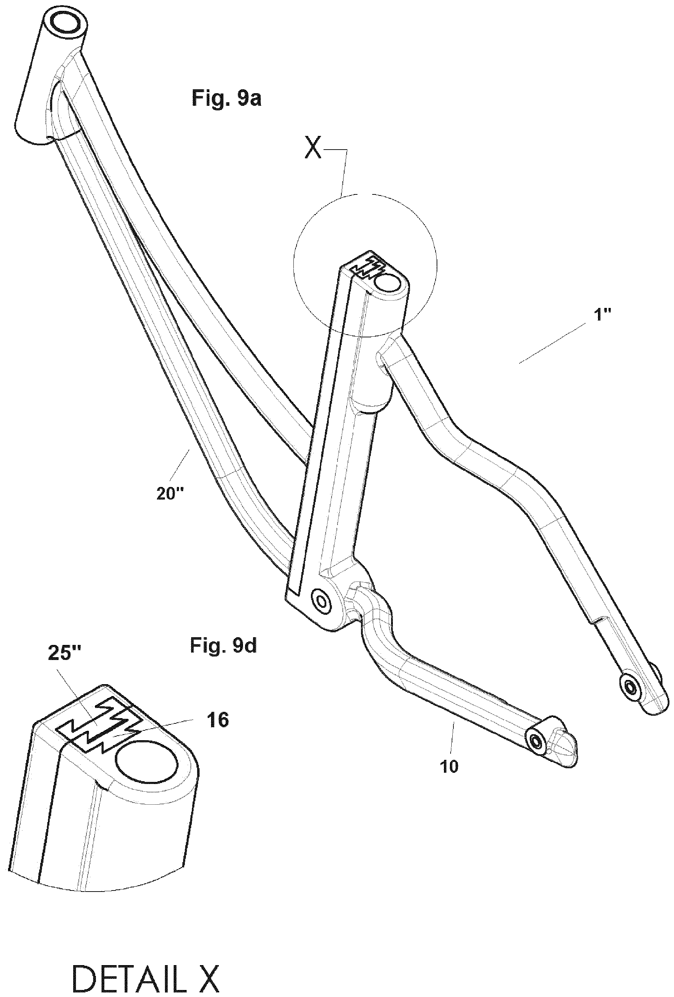

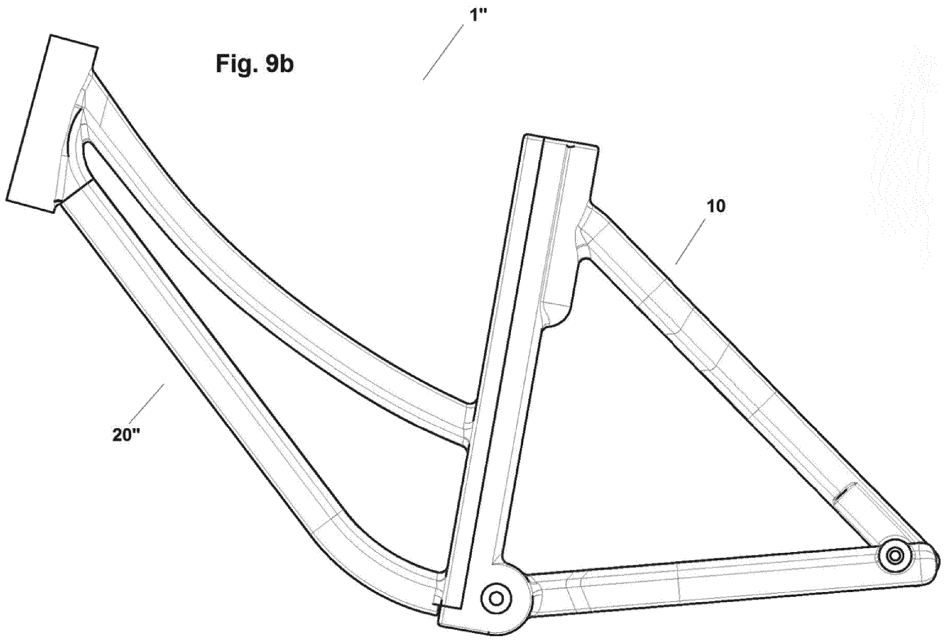

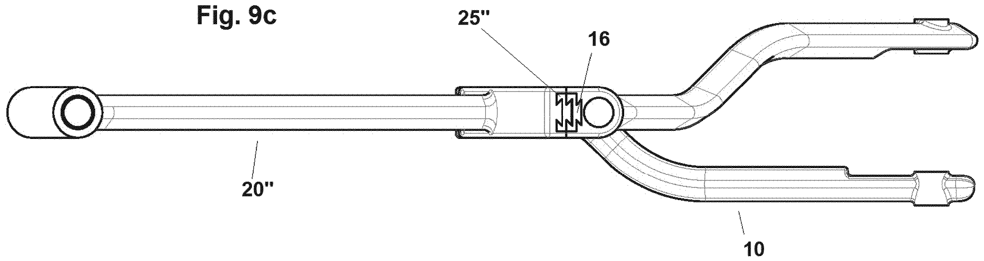

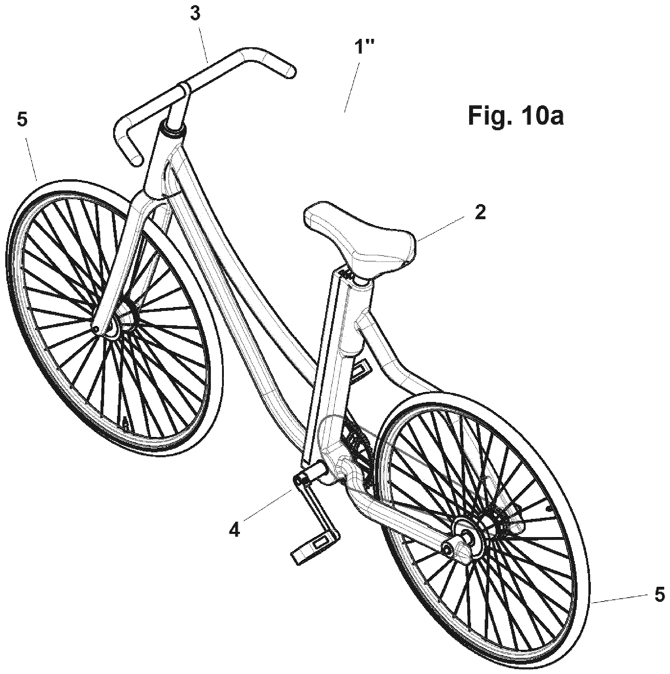

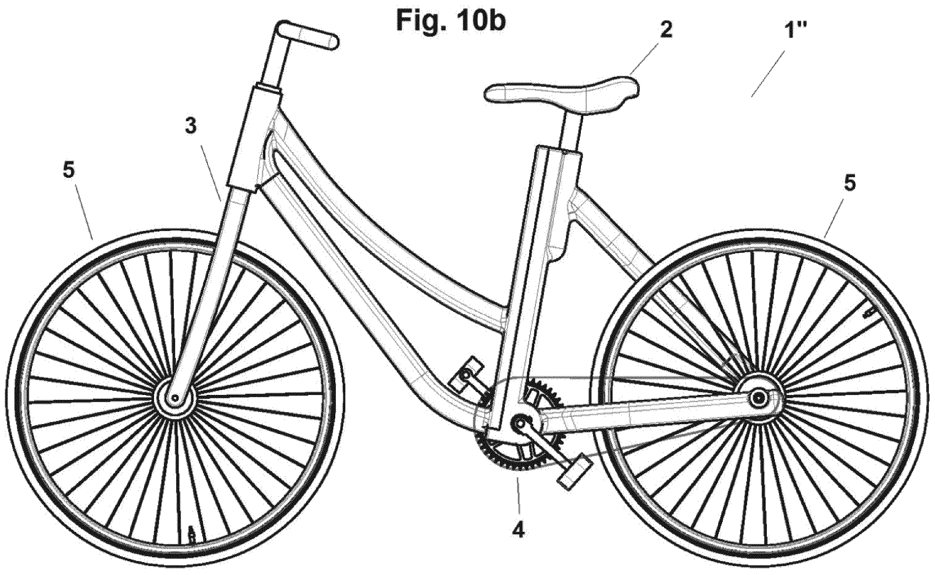

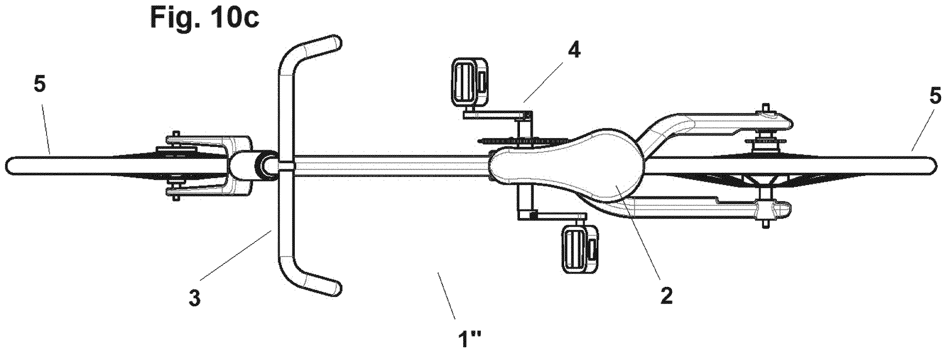

Dieses Modul 20" der Figur 8 kann mit dem Modul 10 der Figur 1 zu einem Damenfahrradrahmen 1" zusammengefügt werden, der in Figur 9 dargestellt ist und die Grundlage für das in Figur 10 dargestellte Damenfahrrad bildet.

In derselben Weise könnte das Modul 20" der Figur 8 natürlich auch mit dem Modul 10' der Figur 5 verbunden werden, um einen alternativen Damenfahrradrahmen zu bilden.

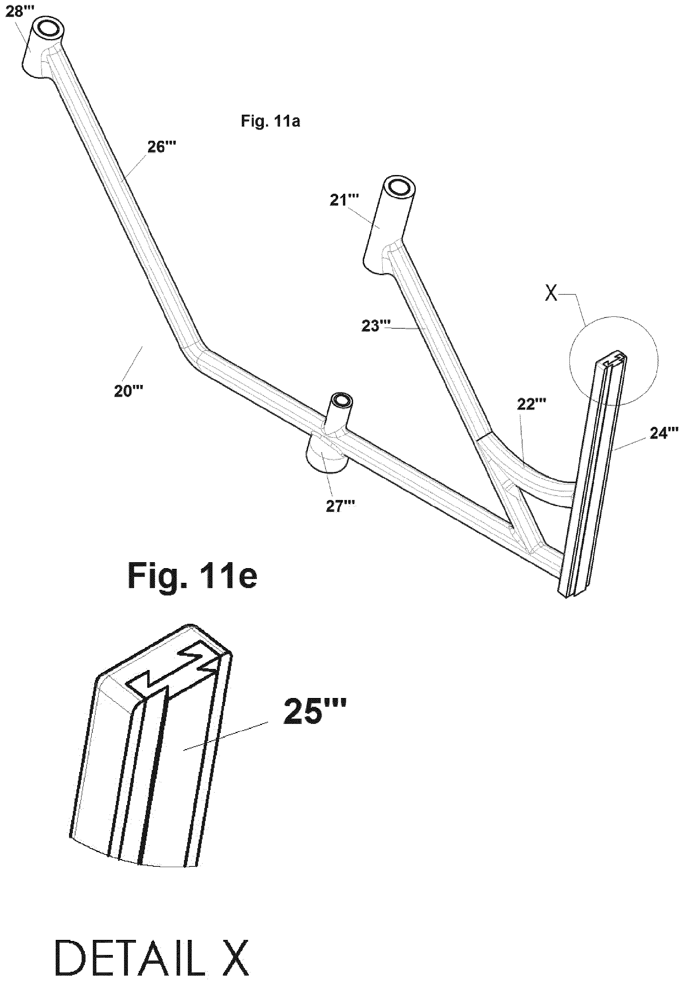

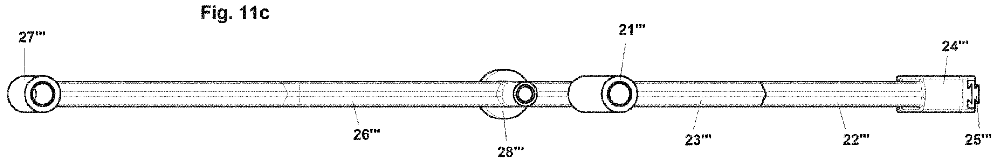

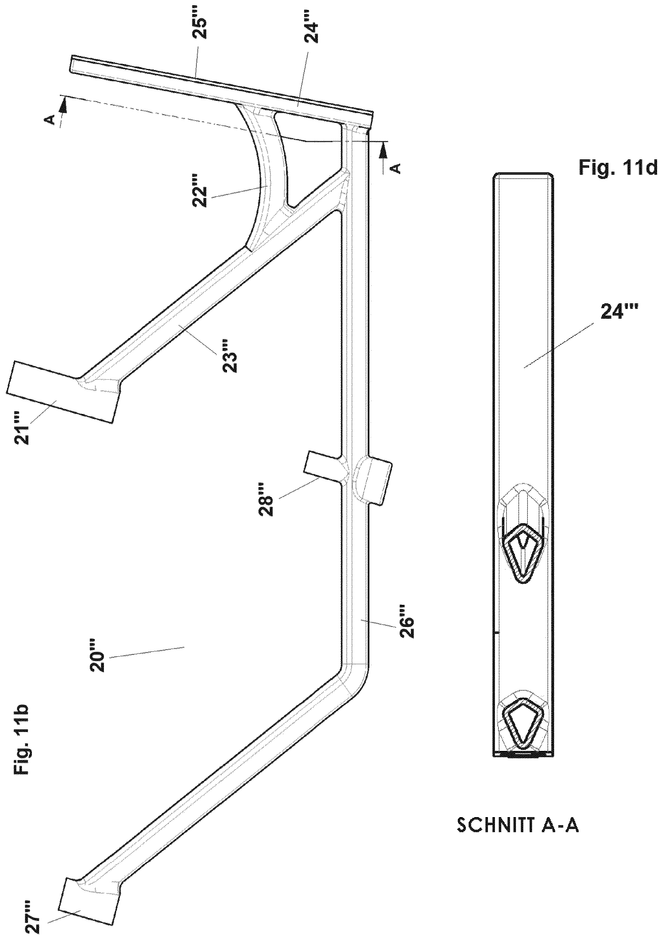

Des Weiteren ist in der Figur 11 ein Modul 20‴ eines erfindungsgemäßen Fahrradrahmens in unterschiedlichen Ansichten gezeigt, welches einen gegenüber dem Modul 20 der Figur 2 wiederum alternativen Vorderteil des Rahmens darstellt. Dieselben Elemente werden mit denselben Bezugszeichen wie zuvor bezeichnet, außer dass drei Apostrophe angefügt werden. Das Modul 20‴ stellt das Vorderteil eines Lastfahrrades dar, wie es beispielsweise von Eltern oder Postboten gerne verwendet wird.

Im Modul 20‴ reicht das Oberrohr 22‴ an seiner Vorderseite nicht bis zum Steuerrohr 21‴, sondern mündet auf einer Teilstrecke des Weges in das Unterrohr 23‴. Das Unterrohr 23‴ wiederum reicht an der Rückseite nicht ganz bis zur Verbindungsleiste 24"', sondern mündet kurz davor in ein Verlängerungsrohr 26‴, das im fertigen Fahrrad unter dem Lastenkorb liegen soll und sich unterhalb des Unterrohres 23‴ nach vorne über die Position des Steuerrohres 21‴ hinaus erstreckt. Es erstreckt sich zunächst in waagrechter Richtung nach vorne und weist dann einen Knick auf, sodass sich der vordere Endbereich schräg nach oben erstreckt. Am vorderen Ende des Verlängerungsrohres 26‴ ist ein vorderes Lagerrohr 27‴ angeformt, das im fertigen Fahrrad zur Aufnahme einer lenkerlosen Gabel für das Vorderrad dient. Im waagrechten Bereich des Verlängerungsrohres 26‴ ist an der Verlängerung der gedachten Achse des Steuerrohres 21‴ eine untere Steuerhülse 28‴ eingeformt, die im fertigen Fahrrad einen gabellosen Steuersatz aufnehmen soll, der dann über geeignete Verbindungsmittel wie beispielsweise ein Gestänge oder einen Seilzug mit dem Vorderrad in Kontakt gebracht wird.

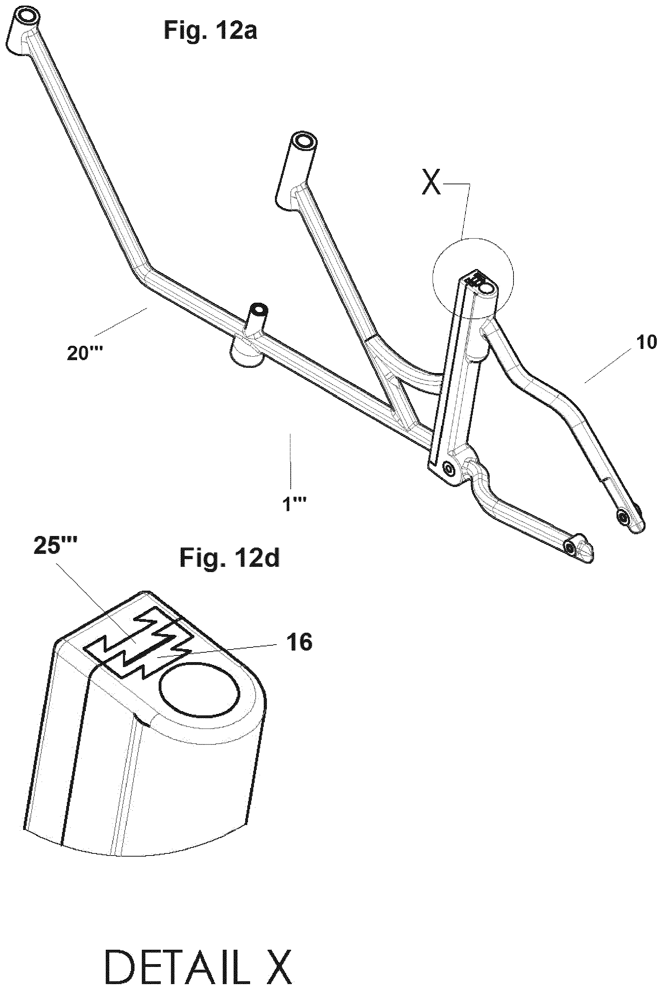

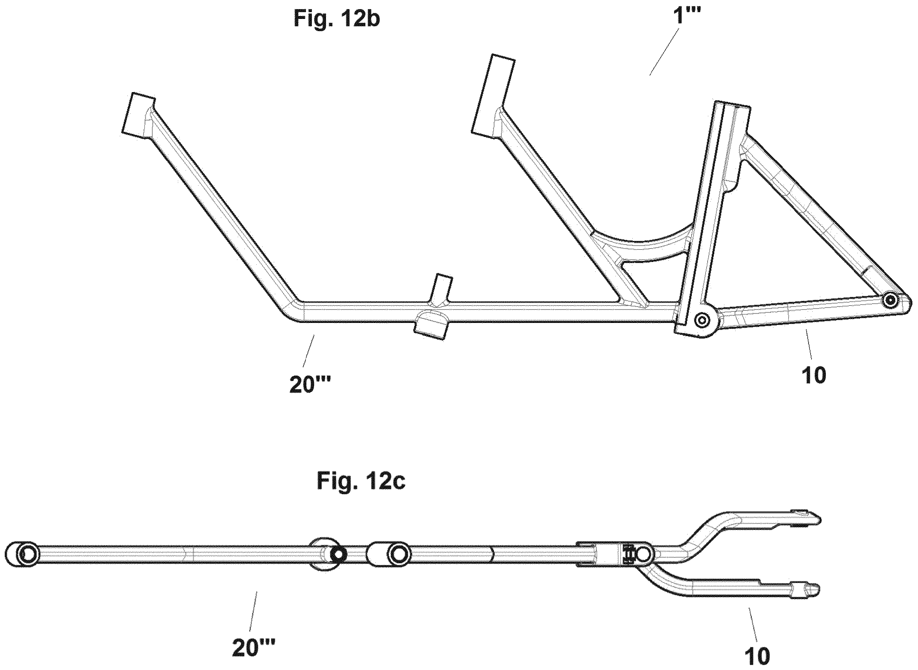

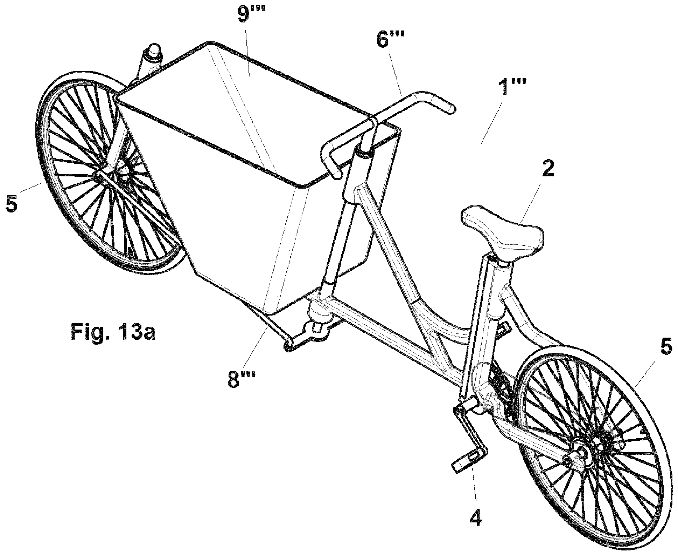

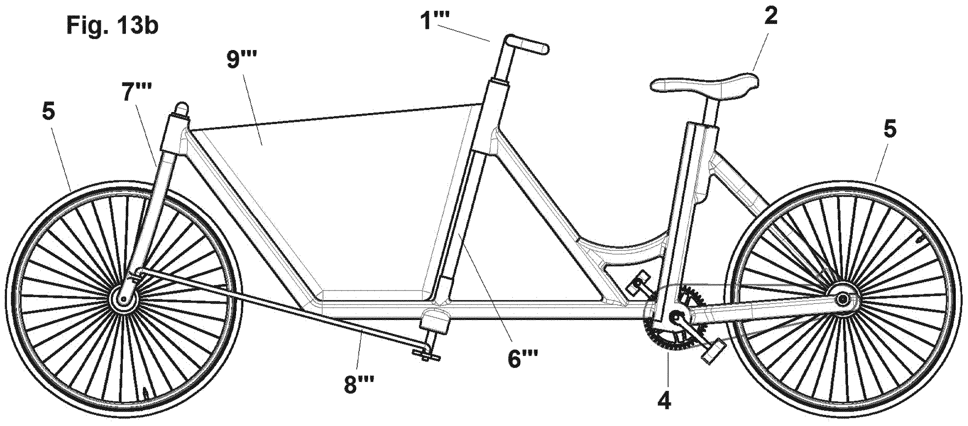

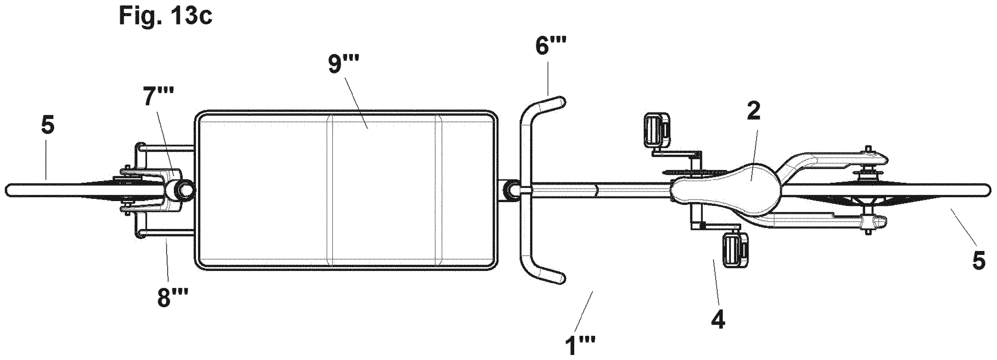

Dieses Modul 20‴ der Figur 11 kann mit dem Modul 10 der Figur 1 zu einem Lastfahrradrahmen 1‴ zusammengefügt werden, der in Figur 12 dargestellt ist und die Grundlage für das in Figur 13 dargestellte Lastfahrrad bildet. Im Gegensatz zu den bisherigen Fahrrädern ist in dieser Ausführungsform ein gabelloser Steuersatz 6‴ vorgesehen, der oben im Steuerrohr 21‴ und unten in der unteren Steuerhülse 28‴ gelagert ist. Eine separate, lenkerlose Gabel 7‴ zur Fixierung des vorderen Rads 5 ist im vorderen Lagerrohr 27‴ aufgenommen. Die lenkerlose Gabel 7‴ und der gabellose Steuersatz 6‴ stehen über ein Gestänge 8‴ in Verbindung. Im zwischen Steuerrohr 21‴, vorderem Lagerrohr 27‴ und Verlängerungsrohr 26‴ gebildeten Bereich ist ein Lastenbehälter 9‴ vorgesehen.

Auch hier gilt, dass das Modul 20‴ der Figur 11 mit dem Modul 10' der Figur 5 verbunden werden könnte, um einen alternativen Lastfahrradrahmen zu bilden.

Die Module 10', 20" und 20‴ werden in prinzipiell identischer Weise mit Hilfe eines Spritzgießverfahrens gefertigt, wie dies oben für Module 10 und 20 beschrieben wurde.

Auch weitere Varianten von Hinterteil-Modulen 10 und Vorderteil-Modulen 20 sind denkbar. Es ist ersichtlich, dass auf diese Weise durch beliebige Kombination korrespondierender Einzelteile eine große Modellvielfalt erzeugt werden kann.

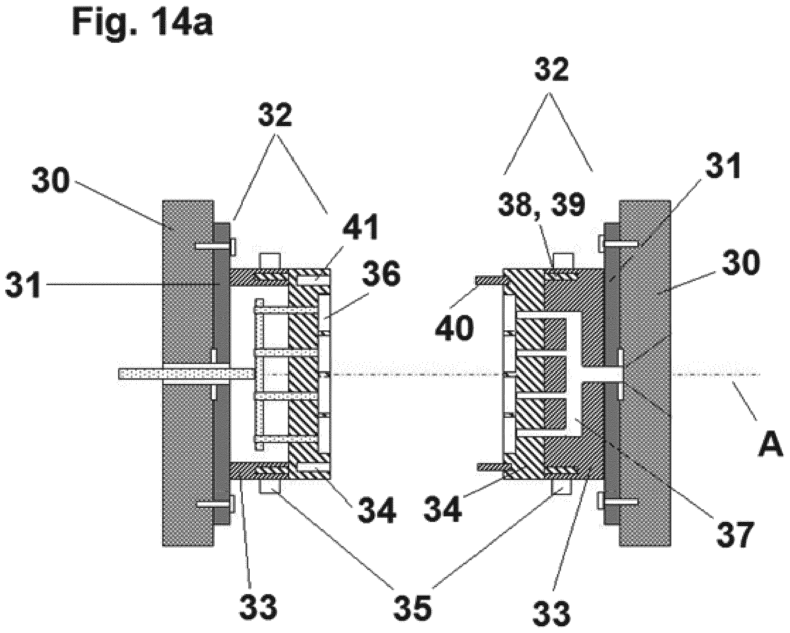

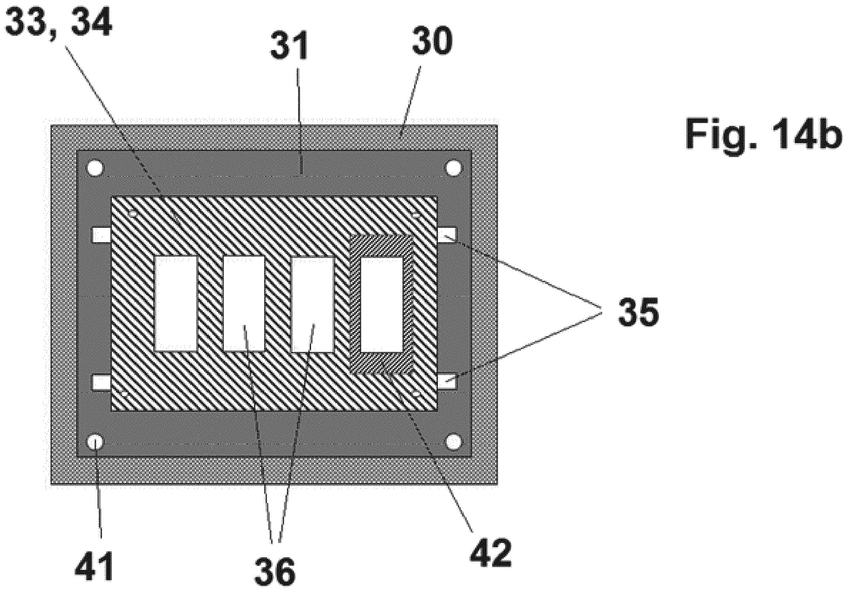

Figur 14 zeigt Darstellungen gegenüberliegender Aufspannplatten und Werkzeuge einer Spritzgießmaschine zur Herstellung der Module 10 und 20 eines erfindungsgemäßen Verfahrens. Die Darstellungen sind lediglich schematisch und die Form der Kavität gibt deshalb nicht die Form der Module wieder, sondern eine abstrakte rechteckige Form.

Von den Aufspannplatten 30 ist eine stationär und die andere kann entlang der Maschinenachse A verfahren werden. Auf den Aufspannplatten 30 ist jeweils eine Montageplatte 31 vorgesehen, die mit den Aufspannplatten 30 verbolzt ist. Das individuelle Spritzgießwerkzeug 32 ist lösbar an dieser Montageplatte 31 befestigt. Jede Werkzeughälfte 32 umfasst zwei separate Teile, nämlich eine lösbar an der Montageplatte befestigte Stammplatte 33 und eine wiederum lösbar an der Stammplatte 33 befestigte Konturplatte 34. Für die lösbaren Befestigungen können nicht näher dargestellte mechanische Schnellspannsysteme 35 verwendet werden. Die Kavität 36 wird durch die gegenüberliegenden Konturplatten 34 definiert. Durch diese zweiteilige Ausführung der Werkzeughälften 32 wird ermöglicht, dass für ähnliche Module, beispielsweise die Herrenausführung 20 und die Damenausführung 20" des Vorderteil-Moduls unter Verwendung derselben Stammplatten 33 hergestellt werden können. So ist es nicht erforderlich, bei beispielsweise einem Wechsel von einer Herstellung des Moduls 20 zu einer Herstellung des Moduls 20" die gesamten Werkzeughälften 32 zu tauschen, sondern es muss lediglich ein Teil davon getauscht werden, nämlich die Konturplatten 34. Es liegt ein Baukastenprinzip vor. Die verhältnismäßig kleinen Konturplatten 34 sind in der Anschaffung günstiger als gesamte Werkzeughälften 32 und zudem einfacher zu wechseln, wodurch sich signifikante Vorteile in der Produktion ergeben.

Die Füllkanäle 37 für die thermoplastische Masse erstrecken sich sowohl durch die Stammplatten 33 als auch durch die Konturplatten 34. Die Verbindung der Füllkanalteile erfolgt durch fluchtende Auflage bei präziser Montage der Konturplatten 34 an den Stammplatten 33. Diese präzise Montage wird unter anderem durch die Montagestifte 38 an der Konturplatte 34 und Montagelöcher 39 an der Stammplatte 33 und ermöglicht, die jeweils in Richtung der Achse A stehen. Die Konturplatten 34 weisen an der zur Kavität 35 gerichteten Seite ferner Führungsbolzen 40 und Führungslöcher 41 auf, die ein präzises Schließen der Werkzeughälften 32 im Betrieb begünstigen.

An den Konturplatten 34 befinden sich ferner in der Figur nicht dargestellte Injektionsdüsen zum Eindrücken des Fluids während des Fluidinjektionsverfahrens. Diese Injektionsdüsen sind am Fließwegende der Kavität 35 positioniert. Der ebenfalls nicht dargestellte Anschluss der Fluidleitungen an die Düsen ist seitlich an den Konturplatten 34 angeordnet, sodass er frei zugänglich ist und nicht an den Stammplatten 33 aufliegt. Ebenfalls nicht dargestellt sind die auch an den Konturplatten 34 angeordneten Kernzüge zur Formung der oben näher bezeichneten Rohrteile.

In der Kavität 35 sind ferner Wechseleinsätze 42 eingelegt, die Detailaspekte des Module 10 und 20 abbilden können, sodass in manchen Fällen auch beim Wechsel von einer Herstellung einer Art eines Moduls 10 bzw. 20 zur Herstellung einer anderen Art eines Moduls 10 bzw. 20 noch nicht einmal ein Wechsel der Konturplatten 34 notwendig ist, sondern lediglich ein Wechsel der Wechseleinsätze 42. Die Einsätze 42 können beispielsweise formschlüssig in der Kavität 36 gehalten werden.

Die Spritzgießmaschine weist ferner ein mechanisches Auswurfsystem 43 auf, das nur in der linken Hälfte gezeigt ist. Auch in der anderen Hälfte befindet sich aber ein derartiges System. Das Auswurfsystem 43 dient zum Auswurf der fertig gegossenen und erstarrten Module 10 bzw. 20.

## Patentansprüche

1. Verfahren zur Herstellung eines Fahrradrahmens aus wenigstens zwei Modulen (10, 20), wobei die Module (10, 20) einzeln hergestellt und an korrespondierenden Verbindungsabschnitten miteinander verbunden werden, wobei wenigstens eines der Module (10, 20) hohle Rohre mit rundem, ovalen oder mehrkantigen Querschnitt umfasst und anhand eines Spritzgießverfahrens mit der Fluidinjektionstechnik aus thermoplastischen Kunststoff hergestellt wird.
**dadurch gekennzeichnet,**
**dass** ein Modul (10, 20), insbesondere ein Vorder- oder Hinterteil als Einlegeteil bzw. Vorspritzling in ein Spritzgusswerkzeug eingelegt wird und anschließend ein weiteres Modul (20, 10), insbesondere ein Hinter- oder Vorderteil im formgebenden Spritzgusswerkzeug erzeugt wird.

2. Verfahren nach Anspruch 1, **dadurch gekennzeichnet, dass** die Module (10, 20) anhand eines mechanischen Verfahrens aneinander fixiert oder vorfixiert werden, wobei an den Verbindungsabschnitten der Module vorzugsweise korrespondierende Schienen (24, 25) als integraler Bestandteil der Module (10, 20) gebildet werden und diese Schienen (24, 25) zur Fixierung oder Vorfixierung der Module (10, 20) ineinandergeschoben werden.

3. Verfahren nach einem der vorhergehenden Ansprüche, **dadurch gekennzeichnet, dass** es sich bei den Modulen (10, 20) um ein Vorderteil (20) und ein Hinterteil (10) handelt, wobei das Hinterteil (10) den Hinterbau, das Sattelrohr (11) und das Tretlager umfasst, wobei das Vorderteil (20) das Steuerrohr (21), das Ober (22)- und/oder Unterrohr (23) und eine im verbundenen Zustand der Module (10, 20) parallel zum Sattelrohr (11) verlaufende Verbindungsleiste (24) umfasst, und wobei die Verbindungsabschnitte durch das Sattelrohr (11) und die Verbindungsleiste (24) gebildet werden.

4. Verfahren nach einem der vorhergehenden Ansprüche, **dadurch gekennzeichnet, dass** das Spritzgießverfahren an einer Spritzgießmaschine durchgeführt wird, deren Werkzeughälften Stammplatten und Konturplatten aufweisen, wobei die Stammplatten lösbar an den Aufspannplatten der Spritzgießmaschine befestigt sind und wobei die Konturplatten lösbar an den Stammplatten befestigt sind und die Spritzgießkavität für das Modul (10, 20) bilden.

5. Verfahren nach einem der vorhergehenden Ansprüche, **dadurch gekennzeichnet, dass** das Spritzgießverfahren an einer Spritzgießmaschine durchgeführt wird, in deren Kavität ein Wechseleinsatz vorgesehen ist.

6. Verfahren nach einem der vorhergehenden Ansprüche, **dadurch gekennzeichnet, dass** im Rahmen des Spritzgießverfahrens eine Fluidinjektion durchgeführt wird, wobei vorzugsweise vorgesehen ist, dass die Fluidinjektion durch einen Injektor durchgeführt wird, dessen Düse in der Konturplatte oder im Wechseleinsatz angeordnet ist.

7. Verfahren nach einem der vorhergehenden Ansprüche, **dadurch gekennzeichnet, dass** bei der Fluidinjektionstechnik das sogenannte Masserückdrückverfahren oder das sogenannte Aufblasverfahren und/oder das Verdrängen der plastischen Seele in eine Überlaufkavität angewendet wird.

8. Verfahren nach einem der vorhergehenden Ansprüche, **dadurch gekennzeichnet, dass** im Spritzgießverfahren zur Herstellung des Moduls (10, 20) wenigstens ein Fasergebilde, Prepreg und/oder vorzugsweise metallisches Einlegeteil, wie beispielsweise Schienen, Gewindehülsen, Metallhülsen, Aufnahmen in einem vorbestimmten Bereich, zum Beispiel im Achsbereich, in die Spritzgießkavität eingelegt werden.

9. Verfahren nach einem der vorhergehenden Ansprüche, **dadurch gekennzeichnet, dass** der Kunststoff als Caprolactam mit einem dazugehörigen Aktivator in das Spritzgusswerkzeug eingespritzt und im Spritzgusswerkzeug polymerisiert wird.

10. Verfahren nach einem der vorhergehenden Ansprüche, **dadurch gekennzeichnet, dass** das Fluid mit Hilfe eines zweiten Injektors für eine bessere Kühlwirkung zum Zirkulieren gebraucht wird.

11. Verfahren nach einem der vorhergehenden Ansprüche, **dadurch gekennzeichnet, dass** das injizierte Fluid Wasser und/oder Gas und/oder zeitlich hintereinander folgende Gase ist, welches über mindestens einen im Werkzeug angeordneten Injektor gemeinsam oder nacheinander eingebracht wird.

12. Verfahren nach einem der Ansprüche 1 - 11, **dadurch gekennzeichnet, dass** die Module (10, 20) form- und kraftschlüssig miteinander lösbar verbindbar sind.

## Claims

1. Method for producing a bicycle frame from at least two modules (10, 20), wherein the modules (10, 20) are produced individually and are interconnected at corresponding connecting portions, wherein at least one of the modules (10, 20) is produced from hollow tubes having a round, oval or polygonal cross section and is produced from thermoplastic material on the basis of an injection-moulding method using the fluid-injection technique,
**characterised in that**
one module (10, 20), in particular a front part or rear part in the form of an insert or pre-moulded part, is inserted into an injection mould and then a further module (20, 10), in particular a rear part or front part, is produced in the moulding injection mould.

2. Method according to claim 1, **characterised in that** the modules (10, 20) are fixed or pre-fixed to one another using a mechanical method, wherein preferably corresponding rails (24, 25) are formed at the connecting portions of the modules as integral components of the modules (10, 20) and these rails (24, 25) are slid into one another to fix or pre-fix the modules (10, 20).

3. Method according to any of the preceding claims, **characterised in that** the modules (10, 20) are a front part (20) and a rear part (10), wherein the rear part (10) comprises the rear triangle, the seat tube (11) and the bottom bracket, wherein the front part (20) comprises the head tube (21), the top tube (22) and/or down tube (23) and a connecting bar (24) extending in parallel with the seat tube (11) when the modules (10, 20) are in the connected state, and wherein the connecting portions are formed by the seat tube (11) and the connecting bar (24).

4. Method according to any of the preceding claims, **characterised in that** the injection-moulding method is carried out on an injection-moulding machine, the mould halves of which comprise fixed plates and contour plates, wherein the fixed plates are detachably fastened to the mounting plates of the injection-moulding machine and wherein the contour plates are detachably fastened to the fixed plates and form the injection-moulding cavity for the module (10, 20).

5. Method according to any of the preceding claims, **characterised in that** the injection-moulding method is carried out on an injection-moulding machine, in the cavity of which an interchangeable insert is provided.

6. Method according to any of the preceding claims, **characterised in that** fluid injection is carried out as part of the injection-moulding method, wherein it is preferably provided that the fluid injection is carried out by an injector, the nozzle of which is arranged in the contour plate or in the interchangeable insert.

7. Method according to any of the preceding claims, **characterised in that** in the fluid-injection technique, the push-back process or the short-shot process is applied and/or the plastic core is displaced into an overflow cavity.

8. Method according to any of the preceding claims, **characterised in that** in the injection-moulding method for producing the module (10, 20), at least one fibre structure, prepreg and/or preferably metal insert, such as rails, threaded sleeves, metal sleeves, or receptacles in a predetermined region, for example in the axle region, are inserted into the injection-moulding cavity.

9. Method according to any of the preceding claims, **characterised in that** the plastics material is injected into the injection mould in the form of caprolactam comprising an associated activator and is polymerised in the injection mould.

10. Method according to any of the preceding claims, **characterised in that** the fluid is made to circulate by means of a second injector for an improved cooling effect.

11. Method according to any of the preceding claims, **characterised in that** the injected fluid is water and/or gas and/or temporally successive gases, which are introduced together or successively via at least one injector arranged in the mould.

12. Method according to any of claims 1 to 11, **characterised in that** the modules (10, 20) can be detachably interconnected in a form-fitting and force-fitting manner.

## Revendications

1. Procédé de fabrication d'un cadre de bicyclette à partir d'au moins deux modules (10, 20), les modules (10, 20) étant fabriqués individuellement et reliés entre eux au niveau de sections de liaison correspondantes, au moins l'un des modules (10, 20) comprenant des tubes creux de section transversale ronde, ovale ou polygonale et étant fabriqué en matière thermoplastique à l'aide d'un procédé de moulage par injection avec la technique d'injection de fluide,
**caractérisé en ce**
**qu'**un module (10, 20), notamment une partie avant ou arrière, est inséré en tant que partie d'insertion ou pré-injection dans un outil de moulage par injection et ensuite un autre module (20, 10), notamment une partie arrière ou avant, est produit dans l'outil de moulage par injection donnant la forme.

2. Procédé selon la revendication 1, **caractérisé en ce que** les modules (10, 20) sont fixés ou préfixés les uns aux autres à l'aide d'un procédé mécanique, des rails (24, 25) correspondants étant de préférence formés sur les sections de liaison des modules en tant que partie intégrante des modules (10, 20) et ces rails (24, 25) étant enfilés les uns dans les autres pour fixer ou préfixer les modules (10, 20).

3. Procédé selon l'une quelconque des revendications précédentes, **caractérisé en ce que** les modules (10, 20) consistent en une partie avant (20) et une partie arrière (10), la partie arrière (10) comprenant la structure arrière, le tube de selle (11) et le pédalier, la partie avant (20) comprenant le tube de direction (21), le tube supérieur (22) et/ou le tube inférieur (23) et une barre de liaison (24) s'étendant parallèlement au tube de selle (11) à l'état relié des modules (10, 20), et les sections de liaison étant formées par le tube de selle (11) et la barre de liaison (24).

4. Procédé selon l'une quelconque des revendications précédentes, **caractérisé en ce que** le procédé de moulage par injection est réalisé sur une machine de moulage par injection dont les moitiés d'outil présentent des plaques mères et des plaques de contour, les plaques mères étant fixées de manière amovible aux plaques de serrage de la machine de moulage par injection et les plaques de contour étant fixées de manière amovible aux plaques mères et formant la cavité de moulage par injection pour le module (10, 20).

5. Procédé selon l'une quelconque des revendications précédentes, **caractérisé en ce que** le procédé de moulage par injection est réalisé sur une machine de moulage par injection dans la cavité de laquelle est prévu un insert interchangeable.

6. Procédé selon l'une quelconque des revendications précédentes, **caractérisé en ce que**, dans le cadre du procédé de moulage par injection, une injection de fluide est réalisée, il étant de préférence prévu que l'injection de fluide est réalisée par un injecteur dont la buse est agencée dans le plateau de contour ou dans l'insert interchangeable.

7. Procédé selon l'une quelconque des revendications précédentes, **caractérisé en ce que** la technique d'injection de fluide met en œuvre le procédé dit de refoulement de la masse ou le procédé dit de gonflage et/ou le déplacement de l'âme plastique dans une cavité de trop-plein.

8. Procédé selon l'une quelconque des revendications précédentes, **caractérisé en ce que**, dans le procédé de moulage par injection pour la fabrication du module (10, 20), au moins une structure fibreuse, un préimprégné et/ou une partie d'insertion de préférence métallique, comme par exemple des rails, des douilles filetées, des douilles métalliques, des logements sont insérés dans la cavité de moulage par injection dans une zone prédéterminée, par exemple dans la zone de l'axe.

9. Procédé selon l'une quelconque des revendications précédentes, **caractérisé en ce que** la matière plastique est injectée dans l'outil de moulage par injection sous forme de caprolactame avec un activateur associé et est polymérisée dans l'outil de moulage par injection.

10. Procédé selon l'une quelconque des revendications précédentes, **caractérisé en ce que** le fluide est utilisé pour circuler à l'aide d'un deuxième injecteur pour un meilleur effet de refroidissement.

11. Procédé selon l'une quelconque des revendications précédentes, **caractérisé en ce que** le fluide injecté est de l'eau et/ou du gaz et/ou des gaz successifs dans le temps qui sont introduits conjointement ou successivement par au moins un injecteur agencé dans l'outil.

12. Procédé selon l'une quelconque des revendications 1 à 11, **caractérisé en ce que** les modules (10, 20) peuvent être reliés entre eux de manière amovible par complémentarité de formes et à force.
